# EUROPÄISCHE PATENTSCHRIFT

(11) **EP 1 173 361 B1**
(45) Veröffentlichungstag und Bekanntmachung des Hinweises auf die Patenterteilung: **29.10.2003**
(21) Anmeldenummer: 00931064.0
(22) Anmeldetag: 19.04.2000
(51) Int. Cl.: B65B 5/10, B65H 5/24

(54) **ANLAGE UND VERFAHREN ZUM BEFÜLLEN VON PRODUKTAUFNAHMEN MIT PRODUKTEN**
FACILITY AND METHOD FOR FILLING PRODUCT RECEPTACLES WITH PRODUCTS
INSTALLATION ET PROCEDE POUR REMPLIR DES CONTENANTS AVEC DES PRODUITS

(30) Priorität: 19.04.1999 DE 19917657; 19.04.1999 DE 19917655; 19.04.1999 DE 19917656
(43) Veröffentlichungstag der Anmeldung: 23.01.2002
(73) Patentinhaber: NOR-REG AS, 3503 Honefoss (NO)
(72) Erfinder: ODENTHAL, Heinz, D-53909 Zülpich (DE); SCHULTE, Herbert, D-53879 Euskirchen (DE)
(74) Vertreter: Haber, Jan Wilhelm
(86) Internationale Anmeldenummer: EP0003544
(87) Internationale Veröffentlichungsnummer: WO00063077

(56) Entgegenhaltungen:
- US-A- 5 588 285

## Beschreibung

Die Erfindung betrifft ein Verfahren zum Befüllen bzw. Beschicken von Produktaufnahmen, insbesondere von Kartons, mit einer vorgegebenen Anzahl von Produkten, insbesondere von flexiblen Beutelverpackungen, die einzeln in regelmäßigen oder unregelmäßigen Abständen zugeführt und zu einem Produktpulk schuppenförmig überlappend zusammengelegt werden, und die anschließend einer bereitgestellten Produktaufnahme zugeführt werden. Die Erfindung betrifft ferner eine Anlage zur Durchführung dieses Verfahrens, mit einen Zuführförderer, über den die Produkte einzeln der Anlage zuführbar sind, mit einer Schuppstation, in der die Produkte zu einem Produktpulk schuppenförmig überlappend zusammenlegbar sind, und mit einem Füllförderer, über den die Produkte einer in einer Füllstation positionierten Produktaufnahme zuführbar sind, sowie mit einem Produktaufnahmenförderer, durch den die Produktaufnahmen der Füllstation zu- und abführbar sind.

Aus dem deutschen Gebrauchsmuster **DE-U-**9410970 bzw. aus der korrespondierenden amerikanischen Patentschrift US-A-5588285 ist eine derartige Anlage und ein derartiges Verfahren bekannt. Mit dieser Anlage werden Verpackungsbeutel, die mit nicht lagefixiertem Gut gefüllt sind, vertikal nebeneinander stehend in Verpackungskartons eingebracht. Obwohl das erfindungsgemäße Verfahren bzw. die erfindungsgemäße Anlage vorzugsweise bei flachen Beutelverpackungen zum Einsatz kommt, ist es auch ein Einsatz bei anderen stapelbaren Produkten, beispielsweise bei Schachteln oder Karten möglich.

Bei der Anlage gemäß der **DE-U-**9410970 werden die Beutel der Anlage über ein horizontal laufendes Zuführförderband einzeln zugeführt. Dann werden sie auf ein zweites Förderband übergeben, das mit einer geringeren Geschwindigkeit angetrieben wird, als das Zuführförderband. Dadurch werden die Beutel zunächst derart zu einem Beutelpulk geschuppt, daß jeder Beutel teilweise auf dem jeweils vorherigen Beutel aufliegt. In dieser Schuppstation erfolgt die Schuppung jedoch lediglich aufgrund der geringeren Laufgeschwindigkeit des zweiten Förderbandes. Spezielle Schuppmittel zum Erzeugen einer bestimmten Schuppung sind dabei nicht vorhanden. Nachdem eine definierte Anzahl von Beutel zu einem Beutelpulk geschuppt ist wird die Transportgeschwindigkeit des zweiten Förderbandes kurzzeitig erhöht, wodurch ein Abstand zum ersten Beutel des nächsten Beutelpulks gebildet wird.

Anschließend werden die Beutelpulks über eine bogenförmige Füllnase mit einem Untergurt transportiert, die die Beutel aus der horizontalen in die vertikale Position und in den Verpackungskarton hineinbringt. Dabei ist jedoch ein zusätzlicher Abdeckobergurt erforderlich, der die Beutelpulks gegen den Untergurt festhält. Insbesondere an seinem freien Ende verhindert der Obergurt, der weiter nach unten geführt ist als der Untergurt, daß die einzelnen Beutel im Verpackungskarton aus der vertikalen Position in den noch freien Kartonbereich umfallen. Der Obergurt stützt sich dabei auf dem durch die Füllnase geführten Untergurt ab, so daß die geförderten Beutel zwischen dem Obergurt und dem Untergurt eingeklemmt werden.

Ein derartiger Obergurt verursacht nicht nur erhebliche zusätzliche Kosten sondern er kann durch seinen auf den Untergurt ausgeübten Druck auch zur Beschädigung von in den Beuteln enthaltenem druckempfindlichen Gut führen. Außerdem ist es mit dieser bekannten Anlage nicht möglich, die Beutel eines Beutelpulks horizontal in einen Karton einzubringen.

Es sind zwar Anlagen bekannt, mit denen Beutel horizontal in einen Karton eingebracht werden können, aber mit diesen Anlagen ist es nicht möglich, die Beutel auch vertikal in einen Karton einzubringen.

Ein Verfahren und eine Vorrichtung zum Bilden eines Produktstrangs aus mehreren Produkten, insbesondere aus flexiblen Flachbeuteln, die mittels eines Einlaufförderbandes einzeln zugeführt und schuppenförmig überlappend auf ein Auslaufförderband aufeinander gebracht und als Produktstrang abgeführt werden, wobei das Auslaufförderband zur Bildung eines Produktstrangs mit einer Geschwindigkeit angetrieben wird, die geringer ist als die Geschwindigkeit des Einlaufförderbandes und wobei das Auslaufförderband zur Bildung einer Lücke zwischen zwei Produktsträngen mit einer höheren Geschwindigkeit angetrieben wird, ist außerdem aus der europäischen Patentschrift EP 0 331 210 bekannt. Dabei werden mehrere Flachbeutel derart schuppenförmig überlappend zu einem Produktstrang (Produktpulk) zusammengelegt, daß jeder Beutel zu einem Teil auf dem jeweils vorherigen Beutel liegt.

Bei diesem bekannten Verfahren bzw. Vorrichtung werden die einzelnen Beutel auf einem Einlaufförderband auf ein Auslaufförderband übergeben, das mit geringerer Transportgeschwindigkeit angetrieben und etwas tiefer angeordnet ist. An der Übergabestelle zwischen diesen beiden Förderbändern sind die Beutel nicht geführt oder unterstützt, sondern sie fliegen in einem freien Fall auf das Auslaufförderband bzw. auf den vorherigen Beutel. Daher ist eine exakte Positionierung der Beutel im Beutelstrang nicht immer gewährleistet. Insbesondere bei hohen oder sehr hohen Förderleistungen, also bei sehr hohen Förderbandgeschwindigkeiten oder bei mit rieselfähigem Material befüllten Beuteln, deren Schwerpunkt während der Produktion variiert, können die Beutel in undefinierten Positionen landen und in Förderrichtung und/oder seitlich verschoben sowie um einen Winkel verdreht sein. Diese undefinierten Beutelpositionen können zu Störungen im nachfolgenden Verarbeitungsvorgang, insbesondere bei der Verpackung der Beutel in Kartons führen, was mit einem Stillstand der gesamten Anlage und somit mit zusätzlichen hohen Kosten verbunden sein kann. Darüber hinaus treten zusätzliche Probleme bei einem Produktwechsel auf. Wenn sich die Beschaffenheit der Produkte, insbesondere die Abmessungen, die Oberflächenbeschaffenheit, das Gewicht und/oder die Gewichtsverteilung aufgrund unterschiedlicher Beutelfüllungen ändert, landen die Produkte in unterschiedlichen Positionen. Dadurch werden bei einem Produktwechsel erhebliche Umrüstarbeiten erforderlich, die mit einem großen Inbetriebnahmeaufwand verbunden sind. Die Flexibilität und die Wirtschaftlichkeit der gesamten Anlage werden dadurch erheblich einschränkt.

Bei dem aus der voranstehend genannten europäischen Patentschrift EP 0 331 210 bekannten Verfahren und der entsprechenden Vorrichtung zum Bilden eines Produktstrangs aus mehreren Produkten, insbesondere aus flexiblen Flachbeuteln, die mittels eines Einlaufförderbandes einzeln zugeführt und schuppenförmig überlappend auf ein Auslaufförderband gebracht und als Produktstrang abgeführt werden, werden mehrere Flachbeutel derart schuppenförmig überlappend zu einem Produktstrang (Produktpulk) zusammengelegt, daß jeder Beutel zu einem Teil auf dem jeweils vorherigen Beutel liegt.

Bei diesem bekannten Verfahren bzw. Vorrichtung kann lediglich die beschriebene Art einer Schuppung erzeugt werden. Es ist hingegen nicht möglich, eine Schuppung zu erzeugen, bei der jeder Beutel zu einem Teil unter dem jeweils vorherigen Beutel liegt. Des halb wird hier bei der herkömmlichen Schuppung bei einer vertikalen Einführung der Beutel in einen Karton ein oberer Abdeckgurt benötigt, um die Beutel am Füllförderer festzuhalten, was mit den zu der DE-U-9410970 beschriebenen Nachteilen verbunden ist.

Außerdem treten aufgrund des freien Falls der einzelnen Beutel an der Übergabestelle die voranstehend zur EP 0 331 210 beschriebenen Nachteile auf, die die Flexibilität und die Wirtschaftlichkeit der gesamten Anlage erheblich einschränken.

Aufgabe der Erfindung ist es daher, ein einfaches und schnelles Verfahren sowie eine konstruktiv einfache, preiswerte und leicht handhabbare Anlage der eingangs genannten Art zu schaffen, die bei flexiblen Einsatzmöglichkeiten und geringem Platzbedarf die Produkte sowohl in horizontaler als auch in vertikaler Position in die Produktaufnahmen füllen kann und bei sehr hoher Leistung ein produktschonendes Füllen der Produktaufnahmen ermöglicht.

Diese Aufgabe wird erfindungsgemäß durch eine Anlage nach Anspruch 1 bzw. durch ein Verfahren nach Anspruch **41** gelöst. Vorteilhafte Weiterbildungen ergeben sich aus den jeweils abhängigen Ansprüchen.

Wesentlich ist dabei, daß die Produkte eines Produktpulks wahlweise entweder auf oder unter dem jeweils vorherigen Produkt gelegt werden, und daß die Produktpulks den Produktaufnahmen wahlweise entweder vertikal oder horizontal zugeführt werden.

Bei dem erfindungsgemäßen Verfahren ist es dabei wesentlich, daß die Produkte eines Produktpulks derart geschuppt werden, daß ein Produkt jeweils auf dem vorherigen Produkt liegt, wenn die Produkte eines Produktpulks den Produktaufnahmen horizontal zugeführt werden, und daß die Produkte eines Produktpulks derart geschuppt werden, daß ein Produkt jeweils unter dem vorherigen Produkt liegt, wenn die Produkte eines Produktpulks den Produktaufnahmen vertikal zugeführt werden.

Bei der erfindungsgemäßen Anlage ist es wesentlich, daß in der Schuppstation Schuppmittel vorgesehen sind, durch die die Produkte eines Produktpulks so geschuppt werden können, daß sie wahlweise entweder auf oder unter dem jeweils vorherigen Produkt liegen. Weiterhin ist es bei der erfindungsgemäßen Anlage wesentlich, daß im Bereich der Übergabestelle zwischen dem Einlaufförderband und dem Auslaufförderband Verzögerungsmittel zum Verringern der Geschwindigkeit der Produkte und Mittel zum Anheben und/oder Verschwenken der Produkte in die für die Schuppung erforderliche Position vorgesehen sind. Auf diese Weise ist eine kontrollierte, schnelle und sichere Schuppung in der gewünschten Richtung möglich.

Außerdem ist es bei der erfindungsgemäßen Anlage wesentlich, daß der Füllförderer Mittel umfaßt, durch die die Produktpulks den Produktaufnahmen wahlweise sowohl vertikal als auch horizontal zuführbar sind, wobei diese Mittel zusätzlich zu der Füllnase ein um eine horizontale Achse schwenkbares Füllförderband umfassen, durch das die Produktpulks den Produktaufnahmen horizontal zuführbar sind. Dieses Füllförderband kann vorteilhafterweise vor der Füllnase angeordnet sein. Dabei kann es zur vertikalen Befüllung der Produktaufnahmen in einer horizontalen Position die Füllnase mit der Schuppstation verbinden bzw. zur horizontalen Befüllung der Produktaufnahmen in einer geneigten Position direkt in oder an eine Produktaufnahme führen.

Durch die erfindungsgemäße Ausbildung wird eine große Flexibilität bei der Befüllung der Produktaufnahmen erreicht. Es ist sowohl eine vertikale als auch eine horizontale Befüllung möglich. Der Platzbedarf einer erfindungsgemäßen Anlage ist gering, da sowohl für die Produkte als auch für die Produktaufnahmen die Fördermittel und die Förderwege sowie die Befüllungsposition bei beiden Befüllungsarten zumindest im wesentlichen gleich sind. Es sind sehr hohe Leistungen von bis zu 600 Produkten pro Minute schonend und sicher in die Produktaufnahmen einbringbar.

Ein wesentlicher Vorteil der Erfindung liegt darin, daß auch bei der vertikalen Befüllung auf einen Obergurt zum Festhalten der Produktpulks verzichtet werden kann, wenn die Produkte derart geschuppt in die Produktaufnahme transportiert werden, daß jedes Produkt unter dem jeweils vorherigen Produkt liegt. Dabei kann die Befüllung an der der Oberseite des ersten Produkts eines Produktpulks zugewandten Innenseite der Produktaufnahme begonnen werden. Während des Befüllvorgangs wird der Füllförderer bis zur gegenüberliegenden Seite der Produktaufnahme verfahren. Auf diese Weise ist jedes einzelne Produkt zu einer Seite durch die bereits eingebrachten Produkte (bzw. das erste Produkt durch die Innenseite der Stirnwand der Verpackungsaufnahme) und zur anderen Seite durch den Füllförderer gehalten, so daß die Gefahr des Umfallens nicht besteht.

Aufgrund der Tatsache, daß der Füllförderer bei dieser Art der Schuppung keinen zusätzlichen Obergurt zum Festhalten der Produkte benötigt, wird eine Beschädigung der Produkte oder insbesondere des in Beutelverpackungen enthaltenen Guts durch zu hohe Druckkräfte vermieden.

Obwohl das erfindungsgemäße Verfahren bzw. die erfindungsgemäße Anlage vorzugsweise bei flachen Beutelverpackungen zum Einsatz kommt, ist es auch ein Einsatz bei anderen stapelbaren Produkten, beispielsweise bei Schachteln oder Karten möglich.

Besonders vorteilhaft ist es, wenn die Unterdruckkammer, über die das Füllband bei der erfindungsgemäßen Anlage geführt ist, sich über die gesamte Länge der Füllnase erstreckt. Dadurch wird ein besonders sicherer Halt der Produkte auf der Füllnase auch bei sehr hohen Geschwindigkeiten gewährleistet.

In einer bevorzugten Ausführungsform kann die Füllnase dabei zusammen mit der Unterdruckkammer um eine horizontale Achse aus den Produktaufnahmen heraus schwenkbar sein, damit nach der vollständigen Befüllung einer Produktaufnahme eine weitere Produktaufnahme insbesondere über ein Förderband unter die Füllnase gebracht werden kann.

Um ein einfaches, schnelles und zuverlässig arbeitendes Verfahren sowie eine konstruktiv einfache, preiswerte und leicht handhabbare Vorrichtung zu schaffen, die auch bei sehr hohen Förderleistungen sowie bei ständig wechselnden Produkten eine sichere Ablage der Produkte in der erforderlichen Position gewährleisten, wird eine Weiterbildung des erfindungsgemäßen Verfahrens vorgeschlagen.

Diese Weiterbildung des erfindungsgemäßen Verfahrens sieht vor, daß die Geschwindigkeit der Produkte an der Übergabestelle zwischen Einlaufförderband und Auslaufförderband verringert wird, daß an der Übergabestelle zwischen Einlaufförderband und Auslaufförderband die in Förderrichtung vordere Kante der Produkte angehoben und/oder die in Förderrichtung hintere Kante der Produkte abgesenkt wird, daß die Produkte in dieser Position über einen Teil des jeweils vorherigen Produkts gebracht werden, und daß die Produkte anschließend auf das jeweils vorherige Produkt aufgesetzt werden.

Hierdurch wird ein Flug der Produkte im freien Fall und somit eine undefinierte Landung der Produkte sicher ausgeschlossen. Auch bei sehr hohen Förderleistungen von bis zu 600 Produkten pro Minute wird jedes Produkt exakt in der erforderlichen Position abgelegt, so daß Störungen im folgenden Ablauf aufgrund ungenauer Produktlagen ausgeschlossen sind.

Bei der dieser Weiterbildung entsprechenden erfindungsgemäßen Vorrichtung ist es wesentlich, daß an der Übergabestelle zwischen Einlaufförderband und Auslaufförderband Verzögerungsmittel zum Verringern der Geschwindigkeit der Produkte und Hubmittel zum Anheben der in Förderrichtung vorderen Kante der Produkte angeordnet sind. Die Verzögerungs- und Hubmittel können voneinander getrennt oder als bauliche Einheit ausgeführt sein.

Eine solche Vorrichtung gewährleistet bei einfacher Konstruktion auch bei sehr hohen Förderleistungen das sichere und exakte Positionieren der Produkte. Sie ist einfach zu handhaben und kostengünstig herzustellen und zu betreiben.

In einer bevorzugten Ausführungsform sind die Verzögerungsmittel und die Hubmittel als bauliche Einheit durch ein Schupprad gebildet, das an seinem Umfang mehrere Ausnehmungen zur Aufnahme der vorderen Produktkanten aufweist. Die Produkte werden vom Einlaufförderband in die vorzugsweise schaufelförmigen Ausnehmungen hinein gefördert und bis zur Ablage in die erforderliche Postion im Produktstrang bzw. im Produktpulk sicher geführt und gehalten. Der Weg der Produkte ist somit zu jeder Zeit exakt definiert. Die Ausnehmungen können dabei vorzugsweise in radialer und/oder tangentialer Richtung nach außen geöffnet sein.

In einer alternativen Ausführungsform kann auch eine Kette oder ein Band als Verzögerungsmittel und/oder Hubmittel vorgesehen sein.

Vorteilhaft ist es, wenn das Schupprad um eine Achse drehbar ist, die zumindest annähernd parallel zu den Achsen der Umlenkrollen der Förderbänder angeordnet ist. Dadurch werden die Produkte seitlich nicht ausgelenkt.

Eine besonders einfache Konstruktion kann dadurch erreicht werden , daß das Schupprad oberhalb der Förderbänder angeordnet ist. Dabei ist es zur Verarbeitung von verschiedenen Produkten mit unterschiedlichen Abmessungen vorteilhaft, wenn der Abstand zwischen dem Schupprad und den Förderbändern variabel einstellbar ist.

Besonders vorteilhaft ist es, wenn das Schupprad durch einen insbesondere separat steuer- oder regelbaren Antrieb derart angetrieben ist, daß die Umfangsgeschwindigkeit zwischen den Fördergeschwindigkeiten des Einlaufförderbandes und des Auslaufförderbandes liegt. Vorzugsweise kommt als Antrieb ein Servomotor zum Einsatz. Die Umfangsgeschwindigkeit des Schupprades bestimmt die Verringerung der Geschwindigkeit der Produkte.

Es können vorzugsweise zwischen zwei und acht Ausnehmungen in gleicher Ausrichtung gleichmäßig über den Umfang des Schupprades verteilt angeordnet sein. Eine besonders gute Führung der Produkte wird bei drei Ausnehmungen erreicht.

Besonders vorteilhaft ist es, wenn die Ausnehmungen zumindest im wesentlichen tangential am Umfang des Schupprades angeordnet sind und der Außendurchmesser des Schupprades in einem Bereich zwischen zwei Ausnehmungen von der radial inneren Begrenzung einer Ausnehmung zur radial äußeren Begrenzung der benachbarten Ausnehmung kontinuierlich ansteigt. Dabei kann sich dieser Bereich nur über einen Teil oder über die gesamte Umfangsstrecke zwischen zwei Ausnehmungen erstrecken. Der in seinem Durchmesser ansteigende Bereich wirkt als Anschlag, der die Produkte sicher auf das jeweils vorherige Produkt ablegt.

Eine zusätzliche seitliche Führung der Produkte kann vorteilhafterweise dann vorgesehen werden, wenn das Schupprad eine geringere Breite aufweist als die Produkte. Auch ist es dann in einer bevorzugten Ausführungsform möglich oberhalb des Auslaufförderbandes an einer oder an beiden Stirnseiten neben dem Schupprad ein Führungselement als Anschlag für eine seitlich über das Schupprad überstehende Kante eines Produktes anzuordnen. Dadurch kann verhindert werden, daß ein Produkt zu weit vom Auslaufförderband abgehoben wird. Besonders vorteilhaft ist es dabei, wenn an dem in Förderrichtung der Produkte hinteren Ende des Führungselementes ein nach unten gerichteter Vorsprung vorgesehen ist, durch den die maximale Führung der vorderen Produktkante in horizontaler Richtung vorgegeben ist.

Besonders vorteilhaft ist es, wenn das Einlaufförderband und/oder das Auslaufförderband um eine von der Übergabestelle entfernte, zumindest im wesentlichen horizontal verlaufende Achse schwenkbar ist. Auf diese Weise kann der Höhenunterschied an der Übergabestelle zwischen den beiden Förderbändern variabel in Abhängigkeit unterschiedlicher Produktabmessungen eingestellt werden.

In einer bevorzugten Ausführungsform sind die Verzögerungsmittel und Hubmittel derart verschiebbar und/oder verschwenkbar angeordnet, daß sie aus dem Bereich der Übergabestelle entfernbar sind. Dadurch können an der Übergabestelle zwischen den beiden Förderbändern wahlweise auch andere Schuppungsmittel in den Produktfluß gebracht werden, um beispielsweise eine andere Schuppungsrichtung erzeugen zu können.

Um ein einfaches, schnelles und zuverlässig arbeitendes Verfahren sowie eine konstruktiv einfache, preiswerte und leicht handhabbare Vorrichtung zu schaffen, die eine Schuppung erzeugen, bei der ein Produkt unter dem jeweils vorherigen Produkt liegt und die auch bei sehr hohen Förderleistungen sowie bei häufig wechselnden Produkten eine sichere Ablage der Produkte in der erforderlichen Position gewährleisten, wird eine zweite Weiterbildung des erfindungsgemäßen Verfahrens vorgeschlagen.

Diese zweite Weiterbildung des erfindungsgemäßen Verfahrens sieht vor, daß die Geschwindigkeit der Produkte an der Übergabestelle zwischen Einlaufförderband und Auslaufförderband verringert wird, daß an der Übergabestelle zwischen Einlaufförderband und Auslaufförderband die in Förderrichtung hintere Kante der Produkte angehoben und/oder die in Förderrichtung vordere Kante der Produkte abgesenkt wird, daß die Produkte in dieser Position unter einen Teil des jeweils vorherigen Produkts gebracht werden, und daß die Produkte anschließend auf das Auslaufförderband aufgebracht werden.

Hierdurch wird eine reversierte Schuppung erzeugt, bei der jedes Produkt zu einem wesentlichen Teil unter dem jeweils vorherigen Produkt liegt. Auch werden die Produkte sicher abgelegt, so daß ein Flug der Produkte im freien Fall und somit eine undefinierte Landung der Produkte sicher ausgeschlossen ist. Auch bei sehr hohen Förderleistungen von beispielsweise 600 Produkten pro Minute wird jedes Produkt exakt in der erforderlichen Position abgelegt, so daß Störungen im folgenden Ablauf aufgrund ungenauer Produktlagen ausgeschlossen sind.

Eine solche Schuppung bietet beispielsweise für nachfolgende Verpackungsvorgänge verschiedene Vorteile. So kann beispielsweise bei einer vertikalen Einführung der Beutel in einen Karton auf einen oberen Abdeckgurt verzichtet werden, der bei der herkömmlichen Schuppung benötigt wird, um die Beutel am Füllförderer festzuhalten.

Bei der dieser zweiten Weiterbildung entsprechenden erfindungsgemäßen Vorrichtung ist es wesentlich, daß im Bereich der Übergabestelle zwischen Einlaufförderband und Auslaufförderband Verzögerungsmittel zum Verringern der Geschwindigkeit der Produkte und Hubmittel zum Anheben der in Förderrichtung hinteren Kante der Produkte angeordnet sind. Die Verzögerungs- und Hubmittel können voneinander getrennt oder als bauliche Einheit ausgeführt sein.

Eine solche Vorrichtung gewährleistet bei einfacher Konstruktion auch bei sehr hohen Förderleistungen das sichere und exakte Positionieren der Produkte in der gewünschten Schuppungsrichtung. Sie ist einfach zu handhaben sowie kostengünstig herzustellen und zu betreiben.

Besonders vorteilhaft ist es, wenn die Verzögerungsmittel und die Hubmittel als bauliche Einheit durch mindestens ein umlaufendes Zugmittel gebildet sind, auf dem mehrere nach außen gerichtete Mitnehmer angeordnet sind, die zwischen sich Fächer zur Aufnahme Produkte bilden. Die Produkte werden vom Einlaufförderband in die Fächer hinein gefördert und bis zur Ablage in die erforderliche Position im Produktstrang sicher geführt und gehalten. Der Weg der Produkte ist somit zu jeder Zeit exakt definiert.

In einer bevorzugten Ausführungsform sind die Mitnehmer in einem spitzen Winkel zur Oberfläche des Zugmittels angeordnet sind, wobei die Fächer in die Richtung geneigt sind, aus der die Produkte vom Einlaufförderband zugeführt werden. Dadurch werden die Produkte in die für die gewünschte Schuppung erforderliche Neigung gebracht.

Besonders vorteilhaft ist es, wenn die Mitnehmer lösbar auf dem Zugmittel befestigt sind. Dadurch ist eine schnelle und einfache Anpassung an unterschiedliche Produktabmessungen gewährleistet.

In einer bevorzugten Ausführungsform ist das Zugmittel eine um zwei Ritzel umlaufende Kette. Aber auch Bänder Riemen oder ähnliche Zugmittel können erfindungsgemäß eingesetzt werden.

Besonders günstig ist es dabei, wenn die Kette in einem Winkel vom ersten, an der Übergabestelle zwischen Einlaufförderband und Auslaufförderband angeordneten Ritzel, in Transportrichtung der Produkte schräg nach unten zum zweiten Ritzel verläuft. Auf diese Weise können die Mitnehmer besonders einfach zwischen den einzelnen Produkten nach unten herausgezogen werden, nachdem die Produkte in der gewünschten Schuppung auf dem Auslaufförderband abgelegt worden sind.

Eine Anpassung an verschiedene Produktabmessungen kann dabei dadurch erfolgen, daß der Winkel der Mitnehmer und/oder der Winkel der Kette verstellbar ist.

In einer bevorzugten Ausführungsform der Erfindung wird die auf dem Auslaufförderband erzeugte Schuppung besonders sicher von den Mitnehmern des Zugmittels getrennt, indem das Zugmittel durch einen insbesondere separat steuer- oder regelbaren Antrieb derart angetrieben ist, daß die Geschwindigkeitskomponente der Mitnehmer und Fächer in horizontaler Richtung der Geschwindigkeit des Auslaufförderbandes entspricht.

Günstig ist es, wenn zwischen 10 und 50 Mitnehmer gleichmäßig über das Zugmittel verteilt angeordnet sind. In einer bevorzugten Variante sind 20 Mitnehmer vorgesehen.

In einer alternativen Ausführungsform können die Verzögerungsmittel und die Hubmittel auch durch mindestens ein unterhalb der Förderbänder gelagertes Schupprad gebildet sind, das an seinem Umfang mehrere Ausnehmungen zur Aufnahme der Produkte oder der vorderen Produktkanten aufweist.

Besonders vorteilhaft ist es, wenn der Umfang des ersten Ritzels bzw. der Umfang des Schupprades an seiner oberen Stelle zumindest annähernd auf Höhe des Einlaufförderbandes sich befindet. Dadurch wird eine besonders sichere und reibungslose Aufnahme der Produkte gewährleistet.

Eine seitliche Auslenkung der Produkte kann vorzugsweise dadurch verhindert werden, daß die Achsen, um die das Zugmittel umläuft bzw. um die sich das Schupprad dreht, zumindest annähernd parallel zu dem Achsen der Umlenkrollen der Förderbänder angeordnet sind.

In einer bevorzugten Ausführungsform sind auf beiden Seiten der Förderbänder jeweils ein Zugmittel bzw. jeweils ein Schupprad angeordnet ist, von denen die seitlich über die Förderbänder überstehenden Kanten der Produkte erfaßbar sind. Es ist jedoch auch möglich, die Förderbänder in zwei seitliche Teilbänder zu unterteilen und ein Zugmittel bzw. ein Schupprad dazwischen vorzusehen.

Besonders vorteilhaft ist es, wenn das Einlaufförderband und/oder das Auslaufförderband um eine von der Übergabestelle entfernte, zumindest im wesentlichen horizontal verlaufende Achse schwenkbar ist. Auf diese Weise kann der Höhenunterschied an der Übergabestelle zwischen den beiden Förderbändern variabel in Abhängigkeit unterschiedlicher Produktabmessungen eingestellt werden.

In einer bevorzugten Ausführungsform sind die Verzögerungsmittel und Hubmittel derart verschiebbar und/oder verschwenkbar angeordnet, daß sie aus dem Bereich der Übergabestelle entfernbar sind. Dadurch können an der Übergabestelle zwischen den beiden Förderbändern wahlweise auch andere Schuppungsmittel in den Produktfluß gebracht werden, um beispielsweise eine herkömmliche Schuppungsrichtung erzeugen zu können, bei der jedes Produkt auf dem jeweils vorherigen Produkt liegt.

Besonders günstig ist es, wenn zwischen dem Zuführförderer und der Schuppstation ein Ausgleichsförderband vorgesehen ist. Seine Länge beträgt vorzugsweise mindestens die zweifache Länge eines Produktes.

Günstig ist es ferner, wenn zwischen der Schuppstation und dem Füllförderer ein Zwischenförderband vorgesehen ist. Dabei ist das Zwischenförderband und das Auslaufförderband zusammen vorzugsweise mindestens so lang sind wie die Länge eines Produktpulks.

Mittels des Ausgleichsförderbandes und/oder des Zwischenförderbandes können die Produktpulks sowie die Lücken zwischen den Pulks auch bei sehr hohen Leistungen sicher gebildet werden, ohne daß die Zufuhr der Produkte in die Anlage oder die Befüllung der Produktaufnahmen mit Produktpulks gestoppt, verzögert oder in sonstiger Weise beeinflußt werden muß.

Eine besonders platzsparende Anordnung der Anlage kann erfindungsgemäß dadurch erreicht werden, daß der Produktaufnahmenförderer derart angeordnet ist, daß die Produktaufnahmen in der Anlage in die gleiche Richtung gefördert werden wie die Produkte. Ferner ist eine besonders einfache Logistik bei der Beschickung und beim Abtransport der Produkte und der Produktaufnahmen gewährleistet, wenn die Förderrichtung der Produktaufnahmen der Produktflußrichtung in der Anlage entspricht.

Besonders vorteilhaft ist es, wenn die Förderer und Förderbänder sowie die angetriebenen Mittel der Schuppstation jeweils einzeln oder paarweise durch separate Antriebe, insbesondere durch Servomotoren angetrieben sind. Auf diese Weise können die verschiedenen Aggregate und Mittel sowohl mit gleichen als auch mit voneinander verschiedenen Geschwindigkeiten angetrieben werden. Dadurch kann die Anlage besonders schnell und einfach durch eine entsprechende Steuerung der Antriebe an verschiedenen Formate von Produkten und/oder von Produktaufnahmen angepaßt werden. Aufwendige mechanische Umrüstarbeiten sind dabei nicht erforderlich.

Der Platzbedarf bei erhöhter Leistung kann weiterhin dadurch erhöht werden, daß mindestens zwei unabhängig voneinander betreibbare Beschickungsbahnen mit jeweils einem Zuführförderer, einer Schuppstation, einem Füllförderer und einem Produktaufnahmenförderer nebeneinander angeordnet sind.

Weitere Vorteile und Merkmale der Erfindung ergeben sich aus den Unteransprüchen sowie aus der nachfolgenden Beschreibung der in den Zeichnungen dargestellten Ausführungsbeispiele.

Es zeigen:
- Figur 1:: Schematische Darstellung der wesentlichen Elemente einer erfindungsgemäßen Anlage bei vertikaler Befüllung
- Figur 2:: Schematische Darstellung der wesentlichen Elemente der Anlage bei horizontaler Befüllung,
- Figur 3:: vergrößerte Darstellung des Füllförderers aus Figur 1

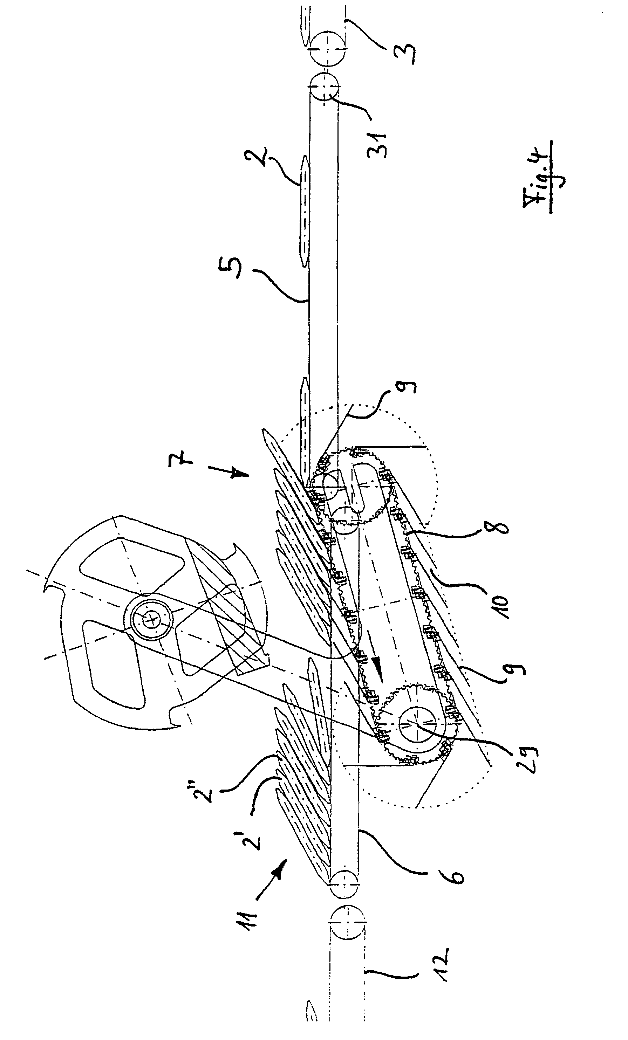

- Figur 4:: Ausführungsbeispiel eines Schuppmittels

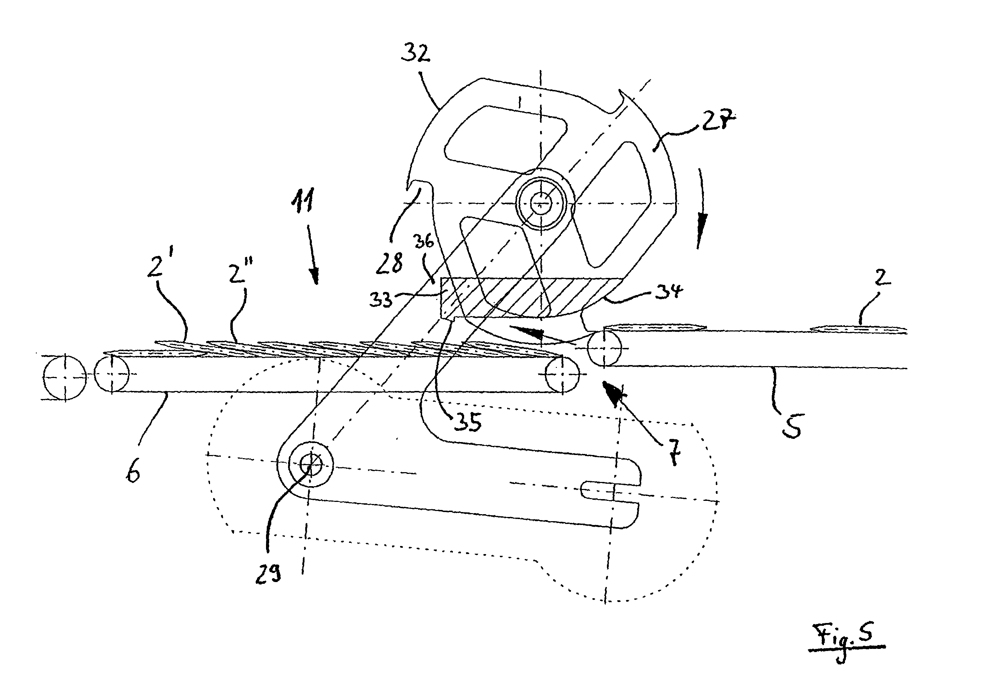

- Figur 5:: Weiteres Ausführungsbeispiel eines Schuppmittels
- Figur 6:: Vergrößerte Teildarstellung des Schuppmittels aus Figur 4

Die Anlage dient zum Beschicken von Kartons 1 mit flexiblen Beutelverpackungen 2, die mit nicht lagefixiertem Gut, beispielsweise mit Pulver gefüllt sind. Dabei schließt sich die Anlage einer nicht dargestellten Füll- und Verschließmaschine zum Abfüllen des Füllgutes in die Beutel 2 sowie einer ebenfalls nicht dargestellten Maschine zum Aufrichten der Kartons 1 an.

Die Beutel 2 werden der Anlage einzeln in variablen, vorzugsweise jedoch zumindest annährend gleichen Abständen über einen nicht näher dargestellten Zuführförderer zugeführt. Zunächst werden sie an ein horizontal laufendes Ausgleichsförderband 3 übergeben. Daran schließt sich eine Schuppstation 4 an, die ein Einlaufförderband 5 und ein sich daran anschließendes Auslaufförderband 6 aufweist.

An der Übergabestelle 7 zwischen diesen beiden Förderbändern 5, 6 befindet sich eine schräg nach unten laufende Kette 8 mit mehreren schräg nach außen gerichteten Mitnehmern 9, die zwischen sich Aufnahmefächer 10 für die Beutel 2 bilden. Die über das Einlaufförderband 5 ankommenden Beutel 2 werden von der Kette 8 derart aufgenommen, daß jeder Beutel 2'' zu einem wesentlichen Teil unter dem jeweils vorhergehenden Beutel 2' liegt. In dieser geschuppten Position werden die Beutel 2 anschließend als Beutelpulk 11 auf dem Auslaufförderband 6 abgelegt.

Von dem Auslaufförderband 6 werden die Pulks 11 an ein Zwischenförderband 12 und von diesem auf ein Füllförderband 13 übergeben. An das Füllförderband 13 schließt sich ein im wesentlichen bekannter Füllförderer 14 mit einer gebogenen Füllnase 15 an, in dem ein gelochtes Füllband 16 über eine Unterdruckkammer 17 geführt ist. Der Füllförderer 14 ist um die der Schuppstation 4 zugewandte Achse 18 schwenkbar, so daß die Füllnase 15 in die Kartons 1 hinein bzw. aus den Kartons 1 heraus bewegt werden kann. Das Füllband 16 ist dabei zum Längeausgleich über mehrere zum Teil gegen Druckmittel verschiebbar gelagerte Umlenkrollen 19 geführt.

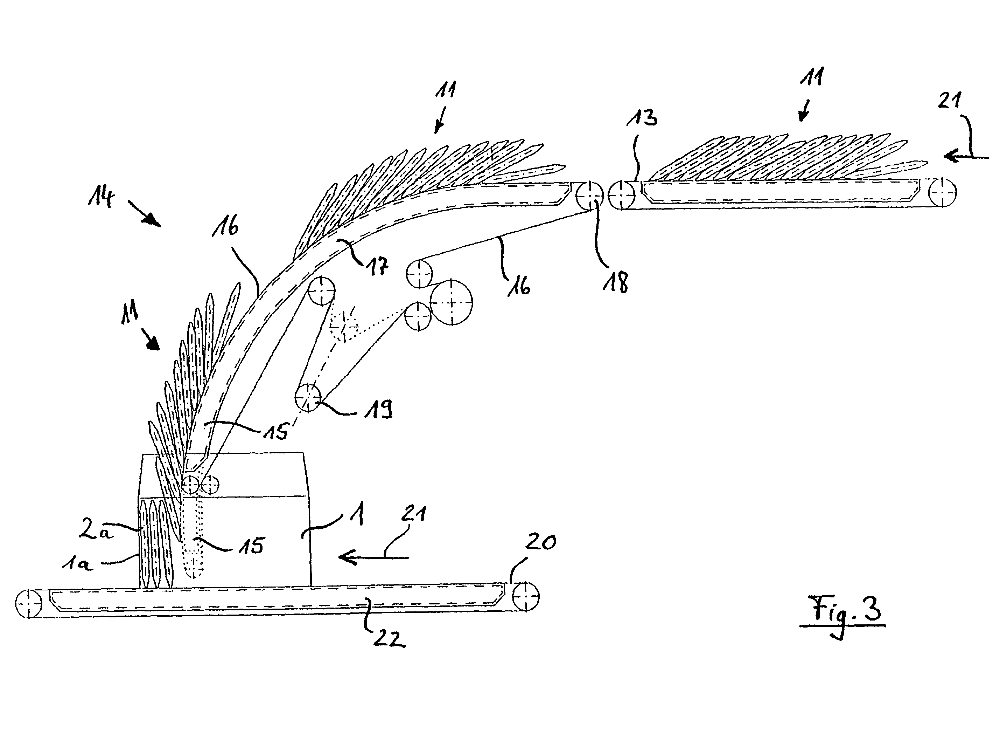

In dem sich im Bereich der Füllnase 15 befindenden Karton 1 werden die Beutel 2 eines Beutelpulks 11 vertikal abgestellt. Bei dem in Figur 3 dargestellten Ausführungsbeispiel wird der erste Beutel 2a an die linke Seite 1a des Kartons 1 eingebracht. Die nachfolgenden Beutel 2 werden jeweils rechts neben den vorherigen Beutel 2 in den Karton 1 eingebracht. Dabei ist jeder Beutel 2 in jeder Position entweder durch die Kartonwände, durch benachbarte Beutel 2 oder durch das untere frei Ende der Füllnase 15 gehalten, so daß kein Beutel 2 umfallen kann. Der Karton 1 wird dabei mittels eines Förderbandes 20 unter der Füllnase 15 hinweg nach links transportiert, so daß der Karton 1 in die gleiche Richtung 21 gefördert wird, wie die Beutel 2 in der Transportlinie 3, 5, 6, 12, 13 der Anlage. Das Förderband 20 ist ebenfalls gelocht und über eine Unterdruckkammer 22 geführt.

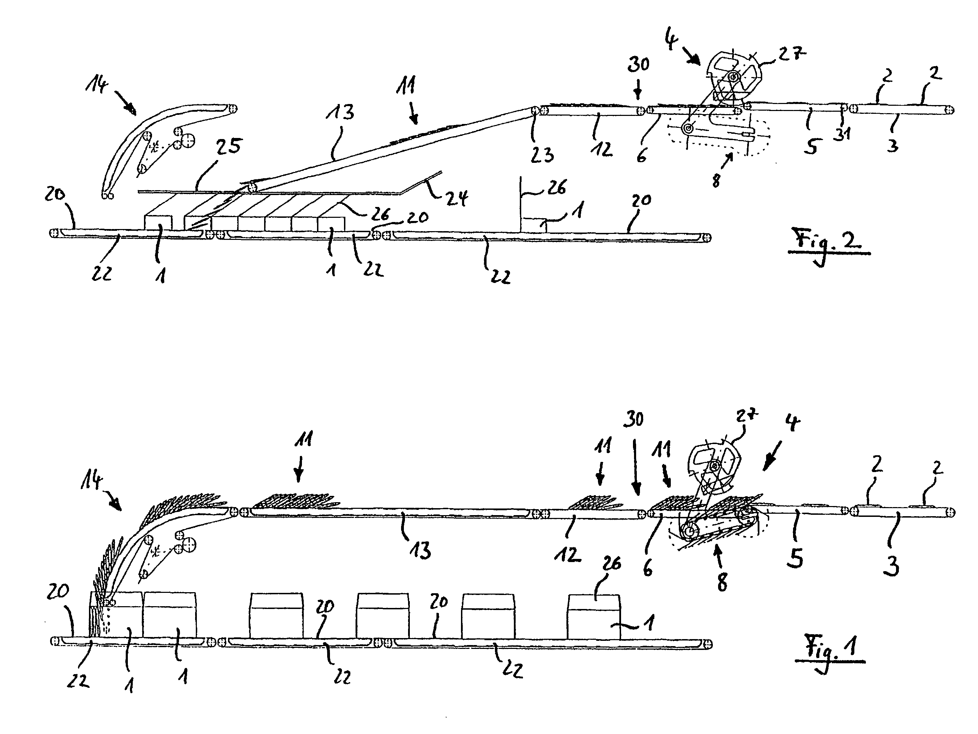

Bei der in Figur 2 gezeigten Anordnung werden in der Anlage Kartons 1 mit horizontal übereinander liegenden Beuteln 2 befüllt. Dazu ist das Füllförderband 13 um seine der Schuppstation 4 benachbarte Achse 23 schräg nach unten verschwenkt, so daß die Beutelpulks 11 nicht zum Füllförderer 14, sondern direkt vom Füllförderband 13 in die Kartons 1 geführt werden. Am freien Ende des Füllförderbandes 13 fallen die Beutel 2 eines Beutelpulks 11 flach aufeinander in den zur Befüllung bereitgestellten Karton 1. In dem Befüllungsbereich ist oberhalb der Kartons 1 seitlich eine mit einer Einlaufschräge 24 versehene Führungsschiene 25 angeordnet, die die Deckel 26 der Kartons 1 in eine schräge halb geöffnete Position bringt. In dieser Position der Deckel 26 werden die einzelnen Beutel 2 bei der Befüllung eines Kartons 1 zusätzlich geführt.

Bei dieser Art der horizontalen Kartonbefüllung kommt an der Übergabestelle 7 der Schuppstation 4 zwischen dem Einlaufförderband 5 und dem Auslaufförderband 6 ein Schupprad 27 mit tangential am Umfang angeordneten schaufelförmigen Ausnehmungen 28 mit den Beuteln 2 in Eingriff. Die über das Einlaufförderband 5 ankommenden Beutel 2 werden durch das Schupprad 27 derart geschuppt, daß jeder Beutel 2'' zu einem wesentlichen Teil auf dem jeweils vorhergehenden Beutel 2' liegt. In dieser geschuppten Position werden die Beutel 2 anschließend als Beutelpulk 11 auf dem Auslaufförderband 6 abgelegt.

Das Schupprad 27 und die Kette 8 sind derart um eine Achse 29 verschwenkbar in der Schuppstation 4 gelagert, daß sie wahlweise mit den über das Einlaufförderband 5 zugeführten Beuteln 2 in Eingriff kommen können. Durch eine schnell durchführbare Verschwenkung kann die Art der Schuppung auf einfache Weise gewechselt werden, wodurch eine hohe Flexibilität der Anlage erreichbar ist. Die Kette 8 und das Schupprad 27 können von einem gemeinsamen Servomotor angetrieben sein, wobei auch das gerade nicht benötigte Schuppmittel 8, 27 weiterhin mit bewegt wird.

Durch einen vor oder hinter dem Ausgleichsförderband 3 angeordneten Detektor kann die Anzahl der zugeführten Beutel 2 von der Anlagensteuerung ermittelt werden. Wenn die gewünschte Anzahl von Beuteln 2 zu einem Beutelpulk 11 zusammengelegt worden ist, wird durch die Anlagensteuerung das Auslaufförderband 6 und das Zwischenförderband 12 kurzzeitig mit einer höheren Geschwindigkeit angetrieben, so daß eine Lücke 30 vor dem nachfolgenden Beutelpulk 11 gebildet wird.

Nachfolgend wird die Ausgestaltung, die Anordnung sowie die Arbeitsweise des Schupprades 27 näher beschrieben: Das Einlaufförderband 5 ist zur Anpassung an verschiedenen Beuteldicken um die Achse der Umlenkwalze 31 schwenkbar und verläuft in der dargestellten Position leicht nach oben ansteigend. Nach dem Einlaufförderband 5 werden die Beutel 2 an das mit geringerer Geschwindigket laufendes Auslaufförderband 6 übergeben, auf dem sie als Beutelpulk 11 bzw. als Beutelstrang abgelegt werden.

An der Übergabestelle 7 ist das Auslaufförderband 6 etwas tiefer positioniert als das Einlaufförderband 5. An das Auslaufförderband 6 schließt sich das Zwischenförderband 12 zum Abtransport der Beutelpulks 11 an.

Oberhalb der Übergabestelle 7 zwischen den beiden Förderbändern 5, 6 befindet sich das Schupprad 27 als Verzögerungs- und Hubmittel für die einzelnen Beutel 2. Am Umfang des Schupprades 27 sind drei Ausnehmungen 28 angeordnet, die in tangentialer Richtung den vorderen Beutelkanten zugewandt sind. Das Schupprad 27 wird von einem Servomotor angetrieben. Seine Umfangsgeschwindigkeit ist dabei geringer als die Fördergeschwindigkeit des Einlaufförderbandes 5, so daß die Beutel 2 durch den Eintritt in die Ausnehmungen 28 des Schupprades 27 verzögert werden.

Hinter dem unteren Totpunkt des Schupprades 27 werden die Vorderkanten der Beutel 2 geringfügig mit den Ausnehmungen 28 nach oben geführt, so daß die Beutel 2 in eine geneigte Position gebracht werden. In dieser Position wird jeder Beutel 2'' zu einem wesentlichen Teil auf den jeweils vorherigen Beutel 2' abgelegt. Dieses Ablegen der Beutel 2 wird durch die Rückenbereiche 32, in denen der Durchmesser des Schupprades 27 bis zur folgenden Ausnehmung 28 kontinuierlich ansteigt, unterstützt. Ein freier Flug oder Fall der Beutel 2 tritt dabei nicht auf.

Das Schupprad 27 hat eine geringere Breite als die Beutel 2. Oberhalb des Auslaufförderbandes 6 ist an beiden Seiten neben dem Schupprad 27 jeweils ein Führungselement 33 als obiger Anschlag für die seitlich über das Schupprad 27 überstehenden Kanten der Beutel 2 angeordnet. An der dem Einlaufförderband 5 zugewandten vorderen Seite weisen die Führungselemente 33 eine Einlaufschräge oder Einlaufrundung 34 auf und am hinteren Ende ist jeweils ein nach unten gerichteter Vorsprung 35 vorgesehen, der die maximale Führung der vorderen Beutelkante in horizontaler Richtung begrenzt.

Das Schupprad 27 ist an dem um die horizontale Achse 29 schwenkbaren Arm 36 gelagert, so daß sein vertikaler Abstand zu den Förderbändern 5, 6 variabel einstellbar ist.
Auch kann das Schupprad 27 so weit von den Förderbändern 5, 6 entfernt werden, daß seine Ausnehmungen 28 nicht mehr mit den Beuteln 2 in Eingriff kommen. In einer ausreichend weit hochgeklappten Position des Schupprades 27 wird die Kette 8 anstelle des Schupprades 27 als zweites Schuppmittel mit den Beuteln 2 in Eingriff gebracht, die eine reversierte Schuppung ermöglicht, bei der ein nachfolgender Beutel 2'' unter dem jeweils vorherigen Beutel 2' liegt. Dabei kann für beide Schuppmittel 8, 27 ein einziger Antrieb und eine einzige Steuerung eingesetzt werden, da das Verfahren zumindest im wesentlichen gleich ist.

Zur Bildung einer Lücke zwischen den einzelnen Beutelpulks 11 wird die Vorrichtung wie nachfolgend beschrieben gesteuert. Mittels eines Sensors oder Detektors, beispielsweise einer Lichtschranke, werden die zugeführten oder geschuppten Beutel 2 in einer Zählvorrichtung gezählt. Beim Erreichen der gewünschten Anzahl von Beuteln 2, die frei programmiert werden kann, wird das Ausgleichsfördernband 3 zunächst mit dem vorletzten und dem letzten Beutel des gerade gebildeten Pulks 11 beschleunigt. Anschließend wird der das Ausgleichsförderband 3 mit dem ersten und zweiten Beutel 2 des nächsten Pulks 11 verzögert. Das Einlaufförderband 5 läuft unabhängig hiervon kontinuierlich mit einer konstanten Geschwindigkeit. Auf diese Weise wird auf dem Einlaufförderband 5 eine Lücke zwischen dem letzten Beutel 2 des gerade gebildeten Pulks 11 und dem ersten Beutel 2 des nächsten Pulks 11 gebildet.

Da die letzten beiden Beutel 2 des gerade gebildeten Pulks 11 aufgrund der vorherigen Beschleunigung des Ausgleichsförderbandes 3 einen geringeren Abstand zu dem jeweils vorhergehenden Beutel 2 haben, werden die Geschwindigkeiten des Schupprades 27 und des Auslaufförderbandes 6 erhöht, um die letzten beiden Beutel 2 aufnehmen zu können. Diese erhöhten Geschwindigkeiten des Schupprades 27 und des Auslaufförderbandes 6 bleiben auch dann beibehalten, wenn die zuvor erzeugte Lücke über das Einlaufförderband 5 das Schupprad 27 erreicht. Dadurch entsteht zwischen den Beutelpulks 11 eine Lücke bzw. zeitlicher Abstand, der für verschiedene Aktionen der nachfolgenden Verfahrensschritte genutzt werden kann. Erst wenn die ersten Beutel 2 des nächsten Pulks 11 das Schupprad 27 erreichen, wird die Geschwindigkeit des Schupprades 27 und des Auslaufförderbandes 6 wieder auf den vorherigen Wert reduziert.

Nachfolgend wird die Ausgestaltung, die Anordnung sowie die Arbeitsweise des Schuppmittels in Form der Kette 8 näher beschrieben: Das Einlaufförderband 5 ist um die Achse der Umlenkwalze 31 schwenkbar und verläuft leicht nach oben ansteigend. Nach dem Einlaufförderband 5 werden die Beutel 2 an das mit geringerer Geschwindigket laufendes Auslaufförderband 6 übergeben, auf dem sie als Beutelpulk 11 bzw. als Beutelstrang abgelegt werden. An der Übergabestelle 7 ist das Auslaufförderband 6 etwas tiefer positioniert als das Einlaufförderband 5. An das Auslaufförderband 6 schließt sich das Zwischenförderband 12 zum Abtransport der Beutelpulks 11 an.

Unterhalb der Übergabestelle 7 zwischen den beiden Förderbändern 5, 6 befindet sich die um zwei Ritzel 37 umlaufende Kette 8 als Verzögerungs- und Hubmittel für die einzelnen Beutel 2. An der Kette 8 sind achtzehn Mitnehmer 9 angeordnet, die zwischen jeweils zwei Mitnehmern 9 ein Fach 10 zur Aufnahme eines Beutels 2 bilden. Die Mitnehmer 9 sind schräg an der Kette 8 befestigt, so daß sie im oberen Trumm in die für die gewünschte Schuppungsart erforderliche Richtung geneigt sind.

Die Kette 8 wird von einem Servomotor mit einer Geschwindigkeit angetrieben, bei der die Geschwindigkeitskomponente der Mitnehmer 9 und Fächer 10 in horizontaler Richtung der Geschwindigkeit des Auslaufförderbandes 6 entspricht.

Der Umfang des ersten Ritzels 37a befindet sich an seiner oberen Stelle auf Höhe des Einlaufförderbandes 5. Hier werden die Mitnehmer 9 auf dem ersten Ritzel 37a derart umgelenkt, daß sie die Beutel 2 anheben und in die erforderliche Schrägstellung schwenken. Anschließend werden die Beutel 2 bereits als Pulk 11 auf dem Auslaufförderband 6 abgelegt, wobei die Mitnehmer 9 in Längsrichtung aus den Spalten zwischen jeweils zwei Beuteln 2 herausfahren. Die zuvor gebildete Strangformation 11 bleibt dabei erhalten. In dieser Position liegt jeder Beutel 2'' zu einem wesentlichen Teil unter dem jeweils vorherigen Beutel 2'. Ein freier Flug oder Fall der Beutel 2 tritt dabei nicht auf.

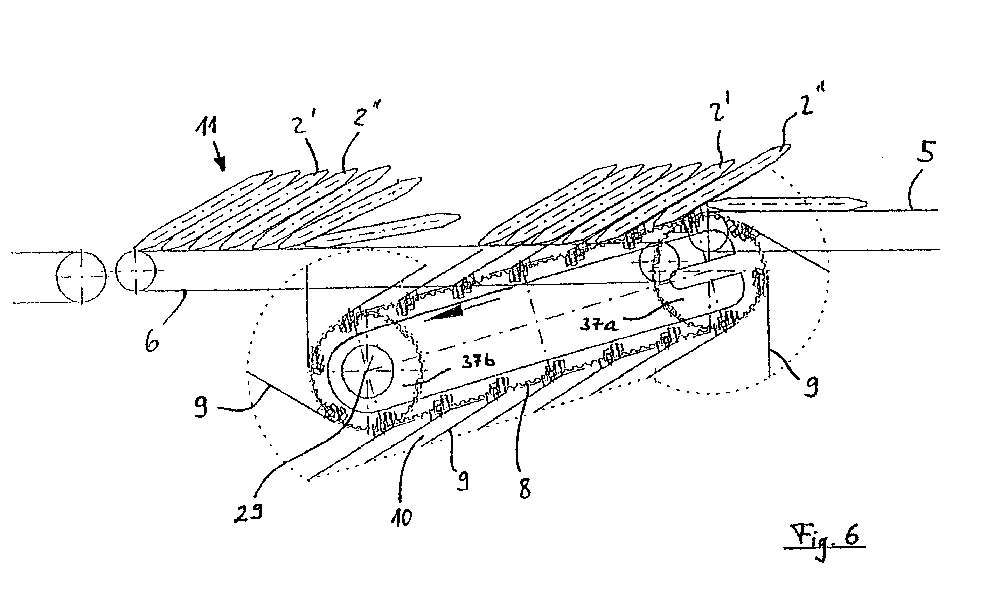

In dem in Figur 6 dargestellten Ausführungsbeispiel ist auf beiden Seiten der Förderbänder 5 und 6 jeweils eine Kette 8 angeordnet. Die Mitnehmer 9 erfassen dabei die auf beiden Seiten über die Förderbänder 5, 6 überstehenden Kanten der Beutel 2.

Die Kette 8 ist um die horizontale Achse 29 des zweiten Ritzels 37b schwenkbar gelagert, so daß sie so weit nach unten von den Förderbändern 5, 6 entfernt werden kann, daß die Mitnehmer 9 nicht mehr mit den Beuteln 2 in Eingriff kommen. In einer ausreichend weit runtergeklappten Position der Kette 8 wird das Schupprad 27 anstelle der Kette 8 als zweites Schuppmittel mit den Beuteln 2 in Eingriff gebracht, das eine kontrollierte herkömmliche Schuppung ermöglicht, bei der ein nachfolgender Beutel auf dem jeweils vorherigen Beutel liegt. Dabei kann für beide Schuppmittel 8, 27 ein einziger Antrieb und eine einzige Steuerung eingesetzt werden, da das Verfahren zumindest im wesentlichen gleich ist.

Zur Bildung einer Lücke zwischen den einzelnen Beutelpulks 11 wird die Vorrichtung in zum Betrieb mit dem Schupprad 27 ähnlicher Weise wie nachfolgend beschrieben gesteuert. Mittels eines Sensors oder Detektors, beispielsweise einer Lichtschranke, werden die zugeführten oder geschuppten Beutel 2 in einer Zählvorrichtung gezählt. Beim Erreichen der gewünschten Anzahl von Beuteln 2, die frei programmiert werden kann, wird das Ausgleichsförderband 3 zunächst mit dem vorletzten und dem letzten Beutel des gerade gebildeten Pulks 11 beschleunigt. Anschließend wird das Ausgleichsförderband 3 mit dem ersten und zweiten Beutel 2 des nächsten Strangs 7 verzögert. Das Einlaufförderband 5 läuft unabhängig hiervon kontinuierlich mit einer konstanten Geschwindigkeit. Auf diese Weise wird auf dem Einlaufförderband 5 eine Lücke zwischen dem letzten Beutel 2 des gerade gebildeten Pulks 11 und dem ersten Beutel 2 des nächsten Pulks 11 gebildet.

Da die letzten beiden Beutel 2 des gerade gebildeten Pulks 11 aufgrund der vorherigen Beschleunigung des Ausgleichsförderbandes 3 einen geringeren Abstand zu dem jeweils vorhergehenden Beutel 2 haben, werden die Geschwindigkeiten der Kette 8 und des Auslaufförderbandes 6 erhöht, um die letzten beiden Beutel 2 aufnehmen zu können. Diese erhöhten Geschwindigkeiten der Kette 8 und des Auslaufförderbandes 6 bleiben auch dann beibehalten, wenn die zuvor erzeugte Lücke über das Einlaufförderband 5 die Kette 8 erreicht. Dadurch entsteht zwischen den Beutelpulks 11 eine Lücke bzw. zeitlicher Abstand, der für verschiedene Aktionen der nachfolgenden Verfahrensschritte genutzt werden kann. Erst wenn die ersten Beutel 2 des nächsten Pulks 11 die Kette 8 erreichen, wird die Geschwindigkeit der Kette 8 und des Auslaufförderbandes 6 wieder auf den vorherigen Wert reduziert.

## Patentansprüche

1. Anlage zum Befüllen von Produktaufnahmen (1), insbesondere von Kartons, mit einer vorgegebenen Anzahl von Produkten (2), insbesondere von flexiblen Beutelverpackungen, die über einen Zuführförderer einzeln der Anlage zuführbar sind,
mit einer Schuppstation (4), in der die Produkte (2) auf das jeweils vorherige Produkt (2') schuppbar zu einem Produktpulk (11) schuppenförmig überlappend zusammenlegbar sind, wobei die Schuppstation (4) ein Einlaufförderband (5) und ein Auslaufförderband (6) umfaßt, und wobei die Produkte (2) in einer Produktflußrichtung (21) durch die Anlage förderbar sind,
und mit einem Füllförderer (14), über den die Produkte (2) einer in einer Füllstation positionierten Produktaufnahme (1) vertikal zuführbar sind, wobei der Füllförderer (14) eine Füllnase (15) mit einem gelochten und über eine Unterdruckkammer geführten Füllband umfaßt, durch die die Produktpulks aus einer horizontalen in eine vertikale Förderrichtung in die Produktaufnahmen hinein umlenkbar sind,
sowie mit einem Produktaufnahmenförderer (20), durch den die Produktaufnahmen (1) der Füllstation in einer Förderrichtung (21) zu- und abführbar sind,
**dadurch gekennzeichnet,**
**daß** die Schuppstation (4) Schuppmittel (8, 27) aufweist, durch die die Produkte (2'') eines Produktpulks (11) wahlweise sowohl auf als auch unter das jeweils vorherige Produkt (2') schuppbar sind, wobei im Bereich der Übergabestelle (7) zwischen dem Einlaufförderband (5) und dem Auslaufförderband (6) Verzögerungsmittel (8, 27) zum Übergabestelle (7) zwischen diesen beiden Förderbändern (5, 6) Verzögerungsmittel (8, 27) zum Verringern der Geschwindigkeit der Produkte (2) und Mittel (28, 9) zum Anheben und/oder Verschwenken der Produkte (2) in die für die Schuppung erforderliche Position vorgesehen sind,
und **daß** der Füllförderer (14) Mittel (15, 13) umfaßt, durch die die Produktpulks (11) den Produktaufnahmen (1) wahlweise sowohl vertikal als auch horizontal zuführbar sind, wobei diese Mittel zusätzlich zu der Füllnase (15) ein um eine horizontale Achse (23) schwenkbares Füllförderband (13) umfassen, durch das die Produktpulks (11) den Produktaufnahmen (1) horizontal zuführbar sind.

2. Anlage nach Anspruch 1, **dadurch gekennzeichnet, daß** das Füllband (16) über eins Unterdruckkammer (17) geführt ist, die sich über die gesamte Länge der Füllnase (15) erstreckt.

3. Anlage nach Anspruch 2, **dadurch gekennzeichnet, daß** die Füllnase (15) zusammen mit der Unterdruckkammer (17) um eine horizontale Achse (18) aus den Produktaufnahmen (1) heraus schwenkbar ist.

4. Anlage nach einem der vorherigen Ansprüche, mit zumindest im wesentlichen horizontal verlaufenden Einlaufund Auslaufförderbändern, **dadurch gekennzeichnet, daß** an der Übergabestelle (7) zwischen Einlaufförderband (5) und Auslaufförderband (6) Verzögerungsmittel (27) zum verringern der Geschwindigkeit der Produkte (2) und Hubmittel (27) zum Anheben der in Förderrichtung vorderen Kante der Produkte (2) angeordnet sind.

5. Anlage nach Anspruch 4, **dadurch gekennzeichnet, daß** die Verzögerungsmittel und die Hubmittel durch ein Schupprad (27) gebildet sind, das an seinem Umfang mehrere Ausnehmungen (28) zur Aufnahme der vorderen Produktkanten aufweist.

6. Anlage nach Anspruch 5, **dadurch gekennzeichnet, daß** die Ausnehmungen (28) in radialer und/oder tangentialer Richtung nach außen geöffnet sind.

7. Anlage nach Anspruch 5 oder 6, **dadurch gekennzeichnet, daß** das Schupprad (27) um eine Achse drehbar ist, die zumindest annähernd parallel zu den Achsen der Umlenkrollen der Förderbänder (5, 6) angeordnet ist.

8. Anlage nach einem der Ansprüche 5 bis 7, **dadurch gekennzeichnet, daß** das Schupprad (27) oberhalb der Förderbänder (5, 6) angeordnet ist.

9. Anlage nach Anspruch 8, **dadurch gekennzeichnet, daß** der Abstand zwischen dem Schupprad (27) und den Förderbändern (5, 6) variabel einstellbar ist.

10. Anlage nach einem der anspräche 5 bis 9, **dadurch gekennzeichnet, daß** das Schupprad (27) durch einen insbesondere separat steueroder regelbaren Antrieb derart angetrieben ist, daß die Umfangsgeschwindigkeit zwischen den Fördergeschwindigkeiten des Einlaufförderbandes (5) und des Auslaufförderbandes (6) liegt.

11. Anlage nach einem der Ansprüche 5 bis 10, **dadurch gekennzeichnet, daß** zwischen zwei und acht, vorzugsweise drei Ausnehnmngen (28) in gleicher Ausrichtung gleichmäßig über den umfang des Schupprades (27) verteilt angeordnet sind.

12. Anlage nach einem der Ansprüche 5 bis 11, **dadurch gekennzeichnet, daß** die Ausnehmungen (28) zumindest im wesentlichen tangential am Umfang des schupprades (27) angeordnet sind und der Außendurchmesser des Schupprades (27) in einem Bereich (32) zwischen zwei Ausnelunungen (28) von der radial inneren Begrenzung einer Ausnehmung (28) zur radial äußeren Begrenzung der benachbarten Ausnehmung (28) kontinuierlich ansteigt.

13. Anlage nach einem der Ansprüche 5 bis 12, **dadurch gekennzeichnet, daß** das Schupprad (27) eine geringere Breite aufweist als die Produkte (2).

14. Anlage nach Anspruch 13, **dadurch gekennzeichnet, daß** oberhalb des Auslaufförderbandes (6) an einer oder an beiden Stirnseiten neben dem Schupprad (27) ein Führungselement (33) als Anschlag für eine seitlich über das Schupprad (27) überstehende Kante eines Produktes (2) angeordnet ist.

15. Anlage nach Anspruch 14, **dadurch gekennzeichnet, daß** an dem in Förderrichtung der Produkte (2) hinteren Ende des Führungselementes (33) ein nach unten gerichteter Vorsprung (35) vorgesehen ist.

16. Anlage nach einem der Ansprüche 4 bis 15, **dadurch gekennzeichnet, daß** das Einlaufförderband (5) und/oder das Auslaufförderband (6) um eine von der Übergabestelle (7) entfernte, zumindest im wesentlichen horizontal verlaufende Achse schwenkbar ist.

17. Anlage nach einem der Ansprüche 4 bis 16, **dadurch gekennzeichnet, daß** die Verzögerungsmittel (27) und Hubmittel (27) derart verschiebbar und/oder verschwenkbar angeordnet sind, daß sie aus dem Bereich der Übergabestelle (7) entfernbar sind.

18. Anlage nach einem der Ansprüche 1 bis 3, mit zumindest im wesentlichen horizontal verlaufenden Einlaufund Auslaufförderbändern, **dadurch gekennzeichnet, daß** im Bereich der Übergabestelle (7) zwischen Einlauf förderband (5) und Auslaufförderband (6) Verzögerungsmittel (8) zum Verringern der Geschwindigkeit der Produkte (2) und Hubmittel (8) zum Anheben der in Förderrichtung hinteren Kante der Produkte (2) angeordnet sind.

19. Anlage nach Anspruch 18, **dadurch gekennzeichnet, daß** die Verzögerungsmittel und die Hubmittel durch mindestens ein umlaufendes Zugmittel (8) gebildet sind, auf dem mehrere nach außen gerichtete Mitnehmer (9) angeordnet sind, die zwischen sich Fächer (10) zur Aufnahme der Produkte (2) bilden.

20. Anlage nach Anspruch 19, **dadurch gekennzeichnet, daß** die Mitnehmer (9) in einem spitzen Winkel zur Oberfläche des Zugmittels (8) angeordnet sind, wobei die Fächer (10) in die Richtung geneigt sind, aus der die Produkte (2) vom Einlaufförderband (5) zugeführt werden.

21. Anlage nach Anspruch 19 oder 20, **dadurch gekennzeichnet, daß** die Mitnehmer (9) lösbar auf dem Zugmittel (8) befestigt sind.

22. Anlage nach einem der Ansprüche 19 bis 21, **dadurch gekennzeichnet, daß** das Zugmittel eine um zwei Ritzel (37a, 37b) umlaufende Kette (8) ist.

23. Anlage nach Anspruch 22, **dadurch gekennzeichnet, daß** die Kette (8) in einem Winkel vom ersten, an der Übergabestelle zwischen Einlaufförderband (5) und Auslaufförderband (6) angeordneten Ritzel (37a), in Transportrichtung der Produkte (2) schräg nach unten zum zweiten Ritzel (37b) verläuft.

24. Anlage nach Anspruch 23, **dadurch gekennzeichnet, daß** der Winkel der Kette (8) verstellbar ist.

25. Anlage nach einem der Ansprüche 20 bis 24, **dadurch gekennzeichnet, daß** der Winkel der Mitnehmer (9) verstellbar ist.

26. Anlage nach einem der Ansprüche 19 bis 25, **dadurch gekennzeichnet, daß** das Zugmittel (8) durch einen insbesondere separat steuer- oder regelbaren Antrieb derart angetrieben ist, daß die Geschwindigkeitskomponente der Mitnehmer (9) und Fächer (10) in horizontaler Richtung der Geschwindigkeit des Auslaufförderbandes (6) entspricht.

27. Anlage nach einem der Ansprüche 19 bis 26, **dadurch gekennzeichnet, daß** zwischen 10 und 50, vorzugsweise 20 Mitnehmer (9) gleichmäßig über das Zugmittel (8) verteilt angeordnet sind.

28. Anlage nach Anspruch 18, **dadurch gekennzeichnet, daß** die verzögerungsmittel und die Hubmittel durch mindestens ein unterhalb der Förderbänder gelagertes Schupprad gebildet sind, das an seinem Umfang mehrere Ausnehmungen zur Aufnahme der Produkte oder der vorderen Produktkanten aufweist.

29. Anlage nach einem der Ansprüche 23 bis 28, **dadurch gekennzeichnet, daß** der Umfang des ersten Ritzels (37a) bzw. der Umfang des Schupprades an seiner oberen Stelle zumindest annähernd auf Höhe des Einlaufförderbandes (5) sich befindet.

30. Anlage nach einem der Ansprüche 19 bis 29, **dadurch gekennzeichnet, daß** die Achsen, um die das Zugmittel (8) umläuft bzw. um die sich das Schupprad dreht, zumindest annähernd parallel zu dem Achsen der Umlenkrollen der Förderbänder (5, 6) angeordnet sind.

31. Anlage nach einem der Ansprüche 19 bis 30, **dadurch gekennzeichnet, daß** auf beiden Seiten der Förderbänder (5, 6) jeweils ein Zugmittel (8) bzw. jeweils ein Schupprad angeordnet ist, von denen die seitlich über die Förderbänder (5, 6) überstehenden Kanten der Produkte (2) erfaßbar sind.

32. Anlage nach einem der Ansprüche 18 bis 31, **dadurch gekennzeichnet, daß** das Einlaufförderband (5) und/oder das Auslaufförderband (6) um eine von der Übergabestelle (7) entfernte, zumindest im wesentlichen horizontal verlaufende Achse schwenkbar ist.

33. Anlage nach einem der Ansprüche 18 bis 32, **dadurch gekennzeichnet, daß** die Verzögerungsmittel (8) und Hubmittel (8) derart verschiebbar und/oder verschwenkbar angeordnet sind, daß sie aus dem Bereich der Übergabestelle (7) entfernbar sind.

34. Anlage nach einem der vorherigen Ansprüche, **dadurch gekennzeichnet, daß** zwischen dem zuführförderer und der Schuppstation (4) ein Ausgleichsförderband (3) vorgesehen ist.

35. Anlage nach Anspruch 34, **dadurch gekennzeichnet, daß** das Ausgleichsförderband (3) mindestens doppelt so lang ist wie die Länge eines Produktes (2).

36. Anlage nach einem der vorherigen Ansprüche, **dadurch gekennzeichnet, daß** zwischen der Schuppstation (4) und dem Füllförderer (14) ein Zwischenförderband (12) vorgesehen ist.

37. Anlage nach Anspruch 36, **dadurch gekennzeichnet, daß** das Zwischenförderband (12) und das Auslaufförderband (6) zusammen mindestens so lang sind wie die Länge eines Produktpulks (11).

38. Anlage nach einem der vorherigen Ansprüche, **dadurch gekennzeichnet, daß** der Produktaufnahmenförderer (20) derart angeordnet ist, daß die Förderrichtung (21) der Produktaufnahmen (1) der Produktflußrichtung (21) in der Anlage entspricht.

39. Anlage nach einem der vorherigen Ansprüche, **dadurch gekennzeichnet, daß** die Produktaufnahmenförderer (20), ein vorzugsweise vor der Schuppstation (4) angeordnetes Ausgleichsförderband (3) und die Förderbänder (5, 6, 12, 13, 16) sowie die angetriebenen Mittel (8, 27) der Schuppstation (4) jeweils einzeln oder paarweise durch separate Antriebe, insbesondere durch Servomotoren angetrieben sind.

40. Anlage nach einem der vorherigen Ansprüche, **dadurch gekennzeichnet, daß** mindestens zwei unabhängig voneinander betreibbare Befüllungsbahnen mit jeweils einem Zuführförderer, einer Schuppstation (4), einem Füllförderer (14) und einem Produktaufnahmenförderer (20) nebeneinander angeordnet sind.

41. Verfahren zum Befüllen von Produktaufnahmen (1), insbesondere von Kartons, mit einer vorgegebenen Anzahl von Produkten (2), insbesondere von flexiblen Beutelverpackungen, die einzeln in regelmäßigen oder unregelmäßigen Abständen zugeführt und zu einem Produktpulk (11) schuppenförmig überlappend zusammengelegt werden, und die anschließend einer bereitgestellten Produktaufnahme (1) zugeführt werden, mit einer Anlage nach einem der vorherigen Ansprüche,
**dadurch gekennzeichnet,**
**daß** die Produkte (2'') eines Produktpulks (11) wahlweise entweder auf oder unter das jeweils vorherige Produkt (2') gelegt werden,
und **daß** die Produktpulks (11) den Produktaufnahmen (1) wahlweise entweder vertikal oder horizontal zugeführt werden,
wobei die Produkte (2) eines Produktpulks (11) entweder derart geschuppt werden, daß ein Produkt (2'') jeweils auf dem vorherigen Produkt (2') liegt und die Produkte (2) eines Produktpulks (11) den Produktaufnahmen (1) horizontal zugeführt werden, oder wobei die Produkte (2) eines Produktpulks (11) derart geschuppt werden, daß ein Produkt (2'') jeweils unter dem vorherigen Produkt (2') liegt und die Produkte (2) eines Produktpulks (11) den Produktaufnahmen (1) vertikal zugeführt werden.

42. Verfahren nach Anspruch 41, wobei ein Produktpulk (11) aus mehreren Produkten (2) gebildet wird, die mittels eines Einlaufförderbandes (5) einzeln zugeführt und schuppenförmig überlappend auf ein Auslaufförderband (6) aufeinander gebracht und als Produktpulk (11) abgeführt werden, wobei das Auslaufförderband (6) zur Bildung eines Produktpulks (11) mit einer Geschwindigkeit angetrieben wird, die geringer ist als die Geschwindigkeit des Einlaufförderbandes (5) und wobei das Auslaufförderband (6) zur Bildung einer Lücke (30) zwischen zwei Produktpulks (11) mit einer höheren Geschwindigkeit angetrieben wird,
**dadurch gekennzeichnet,**
**daß** die Geschwindigkeit der Produkte (2) an der Übergabestelle (7) zwischen Einlaufförderband (5) und Auslaufförderband (6) verringert wird,
**daß** an der Übergabestelle (7) zwischen Einlaufförderband (5) und Auslaufförderband (6) die in Förderrichtung vordere Kante der Produkte (2) angehoben und/oder die in Förderrichtung hintere Kante der Produkte (2) abgesenkt wird,
**daß** die Produkte (2'') in dieser Position über einen Teil des jeweils vorherigen Produkts (2') gebracht werden,
und **daß** die Produkte (2'') anschließend auf das jeweils vorherige Produkt (2') aufgesetzt werden.

43. Verfahren nach Anspruch 41, wobei ein Produktpulk (11) aus mehreren Produkten (2) gebildet wird, die mittels eines Einlaufförderbandes (5) einzeln zugeführt und schuppenförmig überlappend auf ein Auslaufförderband (6) gebracht und als Produktpulk (11) abgeführt werden, wobei das Auslaufförderband (6) zur Bildung eines Produktpulks (11) mit einer Geschwindigkeit angetrieben wird, die geringer ist als die Geschwindigkeit des Einlaufförderbandes (5) und wobei das Auslaufförderband (6) zur Bildung einer Lücke (30) zwischen zwei Produktpulks (11) mit einer höheren Geschwindigkeit angetrieben wird,
**dadurch gekennzeichnet,**
**daß** die Geschwindigkeit der Produkte (2) an der Übergabestelle (7) zwischen Einlaufförderband (5) und Auslaufförderband (6) verringert wird,
**daß** an der Übergabestelle (7) zwischen Einlaufförderband (5) und Auslaufförderband (6) die in Förderrichtung hintere Kante der Produkte (2) angehoben und/oder die in Förderrichtung vordere Kante der Produkte (2) abgesenkt wird,
**daß** die Produkte (2'') in dieser Position unter einen Teil des jeweils vorherigen Produkts (2') gebracht werden,
und **daß** die Produkte anschließend auf das Auslaufförderband (6) aufgebracht werden.

## Claims

1. A plant for the packing of product containers (1), in particular cases, with a predetermined number of products (2), in particular flexible bag packages, which can be fed singly to the plant via a feeder conveyor belt,
having a shingling station (4), in which the products (2) can be collated in a shingled manner, each product (2) overlapping the previous product (2') in each case, to form a product group (11), wherein the shingling station (4) comprises an entry conveyor belt (5) and an exit conveyor belt (6), and wherein the products (2) can be conveyed in a product stream direction (21) through the plant,
and having a loading conveyor belt (14), via which the products (2) can be fed vertically into a product container (1) positioned in a packing station, wherein the loading conveyor belt (14) comprises a loading head (15) with a perforated loading belt guided over a vacuum chamber, by means of which the product groups can be deflected from a horizontal into a vertical conveying direction into the product containers, having as well a product container conveyor (20) by means of which the product containers (1) of the packing station can be fed and carried away in a conveying direction (21),
**characterized in that**
the shingling station (4) has shingling means (8, 27) by which the products (2") of a product group (11) can be shingled selectively either on top of or under the previous product (2') in each case, wherein are provided in the region of the transfer point (7) between the entry conveyor belt (5) and the exit conveyor belt (6) retarding means (8, 27) for reducing the speed of the products (2) and means (28, 9) for lifting and/or pivoting the products (2) into the necessary position for shingling, and that the loading conveyor (14) comprises means (15, 13) by which the product groups (11) can be fed selectively either vertically or horizontally to the product containers (1), these means comprising, in addition to the loading head (15), a loading conveyor belt (13) which can be pivoted about a horizontal axis (23), allowing the product groups (11) to be fed horizontally to the product containers (1).

2. A plant according to Claim 1, **characterized in that** the loading belt (16) is guided over a vacuum chamber (17) extending over the entire length of the loading head (15).

3. A plant according to Claim 2, **characterized in that** the loading head (15) together with the vacuum chamber (17) can be withdrawn from the product containers (1) by pivoting about a horizontal axis (18).

4. A plant according to any of the preceding claims, with at least entry and exit conveyor belts running essentially horizontally, **characterized in that** at the transfer point (7) between entry conveyor belt (5) and exit conveyor belt (6) are arranged retarding means (27) for the purpose of reducing the speed of the products (2) and lifting means (27) for the purpose of lifting the front edge, as seen in the conveying direction, of the products (2).

5. A plant according to Claim 4, **characterized in that** the retarding means and the lifting means are formed by a shingling wheel (27) having on its circumference a plurality of recesses (28) for the purpose of receiving the product front edges.

6. A plant according to Claim 5, **characterized in that** the recesses (28) are open to the outside in radial and/or tangential direction.

7. A plant according to Claim 5 or 6, **characterized in that** the shingling wheel (27) is rotatable about an axis that is arranged at least approximately parallel to the axes of the pulleys of the conveyor belts (5, 6).

8. A plant according to any of Claims 5 to 7, **characterized in that** the shingling wheel (27) is arranged above the conveyor belts (5, 6).

9. A plant according to Claim 8, **characterized in that** he distance between the shingling wheel (27) and the conveyor belts (5, 6) is variably adjustable.

10. A plant according to any of Claims 5 to 9, **characterized in that** the shingling wheel (27) is driven by, in particular, a separately controllable or regulatable drive in such a manner that its circumferential speed lies between the conveying speeds of the entry conveyor belt (5) and the exit conveyor belt (6).

11. A plant according to any of Claims 5 to 10, **characterized in that** between two and eight, preferably three recesses (28) in the same orientation are arranged distributed uniformly around the circumference of the shingling wheel (27).

12. A plant according to any of Claims 5 to 11, **characterized in that** the recesses (28) are arranged at least essentially tangentially on the circumference of the shingling wheel (27) and the outer diameter of the shingling wheel (27) increases continuously in a region (32) between two recesses (28) from the radially inner limit of one recess (28) to the radially outer limit of the neighboring recess (28).

13. A plant according to any of Claims 5 to 12, **characterized in that** the shingling wheel (27) has a narrower width than the products (2).

14. A plant according to Claim 13, **characterized in that** above the exit conveyor belt (6) a guide element (33) is arranged alongside one or both sides of the shingling wheel (27) as a stop for an edge of the product (2) projecting laterally beyond the shingling wheel (27).

15. A plant according to Claim 14, **characterized in that** a downward pointing projection (35) is provided at the rear end of the guide element (33) as seen in the conveying direction of the products (2).

16. A plant according to any of Claims 4 to 15, **characterized in that** the entry conveyor belt (5) and/or the exit conveyor belt (6) is pivotable about an axis at a distance from the transfer point (7) and running at least essentially horizontally.

17. A plant according to any of Claims 4 to 16, **characterized in that** the retarding means (27) and lifting means (27) are displaceably and/or pivotably arranged in such a manner that they can be removed out of the region of the transfer point (7).

18. A plant according to any of Claims 1 to 3, with at least entry and exit conveyor belts running essentially horizontally, **characterized in that** in the region of the transfer point (7) between entry conveyor belt (5) and exit conveyor belt (6) are arranged retarding means (8) for the purpose of reducing the speed of the products (2) and lifting means (8) for the purpose of lifting the rear edge, as seen in the conveying direction, of the products (2).

19. A plant according to Claim 18, **characterized in that** the retarding means and the lifting means are formed by at least one circulating traction means (8) upon which are arranged a plurality of pick-ups (9) pointing outward and forming between one another compartments (10) to receive the products (2).

20. A plant according to Claim 19, **characterized in that** the pick-ups (9) are arranged at an acute angle to the surface of the traction means (8), whereby the compartments (10) are inclined in the direction from which the products (2) are fed by the entry conveyor belt (5).

21. A plant according to Claim 19 or 20, **characterized in that** the pick-ups (9) are fastened detachably on the traction means (8).

22. A plant according to any of Claims 19 to 21, **characterized in that** the traction means is a chain (8) circulating round two sprockets (37a, 37b).

23. A plant according to Claim 22, **characterized in that** the chain (8) runs at an angle from the first sprocket (37a) arranged at the transfer point between entry conveyor belt (5) and exit conveyor belt (6) downward to the second sprocket (37b) in the direction in which the products (2) are being transported.

24. A plant according to Claim 23, **characterized in that** the angle of the chain (8) is adjustable.

25. A plant according to any of Claims 20 to 24, **characterized in that** the angle of the pick-ups (9) is adjustable.

26. A plant according to any of Claims 19 to 25, **characterized in that** the traction means (8) is driven by, in particular, a separately controllable or regulatable drive in such a manner that the speed component of the pick-ups (9) and the compartments (10) corresponds in the horizontal direction to the speed of the exit conveyor belt (6).

27. A plant according to any of Claims 19 to 26, **characterized in that** between 10 and 50, preferably 20 pick-ups (9) are arranged distributed uniformly around the traction means (8).

28. A plant according to Claim 18, **characterized in that** the retarding means and the lifting means are formed by at least one shingling wheel arranged below the conveyor belts and having on its circumference a plurality of recesses to receive the products or the product front edges.

29. A plant according to any of Claims 23 to 28, **characterized in that** the circumference of the first sprocket (37a) or the circumference of the shingling wheel is located at its uppermost point at least approximately at the same level as the entry conveyor belt (5).

30. A plant according to any of Claims 19 to 29, **characterized in that** the axes around which the traction means (8) circulates or around which the shingling wheel rotates are arranged at least approximately parallel to the axes of the pulleys of the conveyor belts (5, 6).

31. A plant according to any of Claims 19 to 30, **characterized in that** on both sides of the conveyor belts (5, 6) is arranged in each case a traction means (8) or in each case a shingling wheel by which the edges of the products (2) projecting laterally beyond the conveyor belts (5, 6) can be taken up.

32. A plant according to any of Claims 18 to 31, **characterized in that** the entry conveyor belt (5) and/or the exit conveyor belt (6) is pivotable about an axis at a distance from the transfer point (7) and running at least essentially horizontally.

33. A plant according to any of Claims 18 to 32, **characterized in that** the retarding means (8) and lifting means (8) are arranged displaceably and/or pivotably in such a manner that they can be removed out of the region of the transfer point (7).

34. A plant according to any of the preceding claims, **characterized in that** a compensating conveyor belt (3) is provided between the feeder conveyor and the shingling station (4).

35. A plant according to Claim 34, **characterized in that** the compensating conveyor belt (3) is at least twice as long as the length of one product (2).

36. A plant according to any of the preceding claims, **characterized in that** an intermediate conveyor belt (12) is provided between the shingling station (4) and the loading conveyor (14).

37. A plant according to Claim 36, **characterized in that** the intermediate conveyor belt (12) and the exit conveyor belt (6) taken together are at least as long as the length of one product group (11).

38. A plant according to any of the preceding claims, **characterized in that** the product container conveyor (20) is arranged in such a manner that the conveying direction (21) of the product containers (1) corresponds to the product stream direction (21) in the plant.

39. A plant according to any of the preceding claims, **characterized in that** the product container conveyor (20), a compensating conveyor belt (3) arranged preferably before the shingling station (4) and the conveyor belts (5, 6, 12, 13, 16) as well as the driven means (8, 27) of the shingling station (4) are driven in each case singly or in pairs by separate drives, in particular by servo motors.

40. A plant according to any of the preceding claims, **characterized in that** at least two packing streams, which can be operated independently of one another, having in each case a feeder conveyor, a shingling station (4), a loading conveyor (14) and a product container conveyor (20) are arranged alongside one another.

41. A method for packing product containers (1), in particular cases, with a predetermined number of products (2), in particular flexible bag packages which are fed singly at regular or irregular intervals and are collated in shingled overlapping manner into a product group (11) and which are then fed to a positioned product container (1) by means of a plant according to any of the preceding claims,
**characterized in that**
the products (2") of a product group (11) are laid selectively either on top of or under the previous product (2') in each case,
and that the product groups (11) are selectively fed to the product containers (1) either vertically or horizontally,
whereby the products (2) of a product group (11) are either shingled in such a manner that one product (2") lies in each case on top of the preceding product (2') and the products (2) of a product group (11) are fed horizontally to the product containers (1), or whereby the products (2) of a product group (11) are shingled in such a manner that one product (2") lies in each case under the preceding product (2') and the products (2) of a product group (11) are fed vertically to the product containers (1).

42. A method according to Claim 41, whereby a product group (11) is formed from a plurality of products (2) which are fed singly by means of an entry conveyor belt (5) and transferred in a shingled overlapping manner to an exit conveyor belt (6) and carried away as a product group (11), whereby for the purpose of forming a product group the exit conveyor belt (6) is driven at a speed that is lower than the speed of the entry conveyor belt (5) and whereby for the purpose of forming a gap (30) between two product groups (11) the exit conveyor belt (6) is driven at a higher speed
**characterized in that**
the speed of the products (2) at the transfer point (7) between entry conveyor belt (5) and exit conveyor belt (6) is reduced, that at the transfer point (7) between entry conveyor belt (5) and exit conveyor belt (6) the front edge, as seen in the conveying direction, of the products (2) is lifted and/or the rear edge, as seen in the conveying direction, of the products (2) is lowered, that the products (2") are brought in this condition into position over a section of the preceding product (2') in each case, and that the products (2") are then set down upon the preceding product (2') in each case.

43. A method according to Claim 41, whereby a product group (11) is formed from a plurality of products (2) which are fed singly by means of an entry conveyor belt (5) and transferred in a shingled overlapping manner to an exit conveyor belt (6) and carried away as a product group (11), whereby for the purpose of forming a product group the exit conveyor belt (6) is driven at a speed that is lower than the speed of the entry conveyor belt (5) and whereby for the purpose of forming a gap (30) between two product groups (11) the exit conveyor belt (6) is driven at a higher speed
**characterized in that**
the speed of the products (2) at the transfer point (7) between entry conveyor belt (5) and exit conveyor belt (6) is reduced, that at the transfer point (7) between entry conveyor belt (5) and exit conveyor belt (6) the rear edge, as seen in the conveying direction, of the products (2) is lifted and/or the front edge, as seen in the conveying direction, of the products (2) is lowered, that the products (2") are brought in this condition into position under a section of the preceding product (2') in each case, and that the products (2") are then placed up against the preceding product (2') in each case.

## Revendications

1. Une installation pour le remplissage de récipients (1) de produits, en particulier de cartons, avec un nombre de produits (2) prédéterminé, en particulier d'emballages en forme de sachets flexibles, qui peuvent être amenés vers l'installation de façon individuelle par un convoyeur d'alimentation,
dotée d'une station (4) de positionnement en écailles, où les produits (2) peuvent être juxtaposés, en forme d'écailles, sur le produit (2') précédent à un instant donné, de façon à former une groupe (11) de produits, qui se recouvrent les uns les autres pour former comme des écailles de poisson, cependant que la station de positionnement (4) en écailles comporte une bande (5) de convoyeur d'entrée et une bande (6) de convoyeur de sortie et cependant que les produits (2) peuvent être convoyés au travers de l'installation dans un sens (21) de flux des produits,
et doté d'un convoyeur (14) de remplissage, qui permet d'alimenter les produits (2) dans la direction verticale vers un récipient (1) de produits, disposé dans une station de remplissage, cependant que le convoyeur (14) de remplissage comporte un nez (15) de remplissage, doté d'une bande de remplissage perforée et guidée au-dessus d'une chambre à dépression, qui permet de dévier les groupes de sachets, en leur faisant quitter une direction de transport horizontale pour une direction de transport verticale, menant jusque dans les récipients de produits,
ainsi que doté d'un convoyeur (20) de récipients de produits, qui permet d'amener et d'évacuer les récipients (1) de produits dans et hors de la station de remplissage, dans un sens (21) du flux,
**caractérisée en ce que**
la station (4) de positionnement en écailles présente des moyens (8, 27) de positionnement en écailles, qui permettent de rassembler par juxtaposition des produits (2") d'un groupe (11) de produits sur, aussi bien que sous, au choix, le produit (2') précédent à un instant donné, cependant que, dans la zone du point (7) de transmission entre la bande (5) de convoyeur d'entrée et la bande (6) de convoyeur de sortie, sont prévus des moyens (8, 27) de ralentissement pour réduire la vitesse des produits (2) et des moyens (28, 9) pour lever et / ou basculer les produits (2) dans la position requise pour le positionnement en écailles,
et que le convoyeur (14) de remplissage comporte des moyens (15, 13), qui permettent d'alimenter les récipients (1) de produits en groupes (11) de produits, dans la direction verticale comme dans la direction horizontale, au choix, cependant que ces moyens comportent, en sus du nez (15) de remplissage, une bande (13) de convoyeur de remplissage, qui peut être basculée autour d'un axe (23) horizontal et qui permet d'alimenter les récipients (1) de produits en groupes (11) de produits dans la direction horizontale.

2. Une installation selon la revendication n° 1, **caractérisée en ce que** la bande (16) de remplissage est guidée au-dessus d'une chambre (17) à dépression, qui s'étend sur la longueur totale du nez (15) de remplissage.

3. Une installation selon la revendication n° 2, **caractérisée en ce que** le nez (15) de remplissage, conjointement avec la chambre (17) à dépression, peut être basculé autour d'un axe (18) horizontal hors des récipients (1) de produits.

4. Une installation selon une des revendications précédentes, dotée de bandes de convoyeur d'entrée et de sortie, qui sont au moins essentiellement disposées de façon horizontale, **caractérisée en ce que** des moyens (27) de ralentissement pour réduire la vitesse des produits (2) et des moyens (27) de levage pour lever l'arête avant, considérée dans le sens du flux, des produits (2) sont disposés au niveau du point (7) de transmission entre la bande (5) de convoyeur d'entrée et la bande (6) de convoyeur de sortie.

5. Une installation selon la revendication n° 4, **caractérisée en ce que** les moyens de ralentissement et les moyens de levage sont constitués d'une roue (27) de positionnement en écailles, qui au niveau de sa périphérie présente plusieurs évidements (28), destinés à recevoir les arêtes avant des produits.

6. Une installation selon la revendication n° 5, **caractérisée en ce que** les évidements (28) sont ouverts sur l'extérieur dans la direction radiale et / ou tangentielle.

7. Une installation selon la revendication n° 5 ou n° 6, **caractérisée en ce que** la roue (27) de positionnement en écailles peut effectuer un mouvement de rotation autour d'un axe, qui est disposé dans une direction au moins presque parallèle aux axes des rouleaux de déviation des bandes (5, 6) de convoyeurs.

8. Une installation selon une des revendications n° 5 à n°7, **caractérisée en ce que** la roue (27) de positionnement en écailles est disposée au-dessus des bandes (5, 6) de convoyeurs.

9. Une installation selon la revendication n° 8, **caractérisée en ce que** la distance entre la roue (27) de positionnement en écailles et les bandes (5, 6) de convoyeurs peut être réglée de façon variable.

10. Une installation selon une des revendications n° 5 à n°9, **caractérisée en ce que** la roue (27) de positionnement en écailles est entraînée par un entraînement pouvant être commandé ou régulé, en particulier de façon indépendante, de telle façon, que la vitesse au niveau de la périphérie est comprise entre les vitesses de transport de la bande (5) de convoyeur d'entrée et de la bande (6) de convoyeur de sortie.

11. Une installation selon une des revendications n°5 à n° 10, **caractérisée en ce que** entre deux et huit, de préférence trois, évidements (28) sont disposés avec la même orientation, de façon à être régulièrement répartis le long de la périphérie de la roue (27) de positionnement en écailles.

12. Une installation selon une des revendications n° 5 à n° 11, **caractérisée en ce que** les évidements (28) sont disposés au moins essentiellement dans la direction tangentielle au niveau de la périphérie de la roue (27) de positionnement en écailles et le diamètre extérieur de la roue (27) de positionnement en écailles croît de façon continue dans une zone (32) séparant deux évidements (28), de la délimitation intérieure dans la direction radiale d'un évidement (28) vers la délimitation extérieure dans la direction radiale de l'évidement (28) voisin.

13. Une installation selon une des revendications n°5 à n°12, **caractérisée en ce que** la roue (27) de positionnement en écailles présente une largeur inférieure à celle des produits (2).

14. Une installation selon la revendication n° 13, **caractérisée en ce que** un élément (33) de guidage est disposé au-dessus de la bande (6) de convoyeur de sortie, à côté de la roue (27) de positionnement en écailles, au niveau d'une ou des deux faces, comme butoir pour une arête d'un produit (2), qui dépasse latéralement par rapport à la roue (27) de positionnement en écailles.

15. Une installation selon la revendication n° 14, **caractérisée en ce que** une protubérance (35), orientée vers le bas, est prévue au niveau de l'extrémité arrière, considérée dans le sens du flux des produits (2), de l'élément (33) de guidage.

16. Une installation selon une des revendications n°4 à n°15, **caractérisée en ce que** la bande (5) de convoyeur d'entrée et / ou la bande (6) de convoyeur de sortie peut basculer autour d'un axe, qui est éloigné du point (7) de transmission et qui est disposé dans une direction au moins essentiellement horizontale.

17. Une installation selon une des revendications n°4 à n°16, **caractérisée en ce que** les moyens (27) de ralentissement et les moyens (27) de levage peuvent coulisser et / ou basculer et sont disposés de telle manière, qu'ils peuvent être amenés à quitter la zone du point (7) de transmission.

18. Une installation selon une des revendications n° 1 à n° 3, dotée de bandes de convoyeurs d'entrée et de sortie disposées au moins essentiellement dans la direction horizontale, **caractérisée en ce que** dans la zone du point (7) de transmission, entre la bande (5) de convoyeur d'entrée et la bande (6) de convoyeur de sortie, sont disposés des moyens (8) de ralentissement pour réduire la vitesse des produits (2) et des moyens (8) de levage pour lever l'arête arrière des produits (2), considérés dans le sens du flux.

19. Une installation selon la revendication n° 18, **caractérisée en ce que** les moyens de ralentissement et les moyens de levage sont constitués d'au moins un moyen (8) de traction circulant, qui porte plusieurs entraîneurs (9) orientés vers l'extérieur, lesquels forment entre eux des cases (10) pour la réception des produits (2).

20. Une installation selon la revendication n° 19, **caractérisée en ce que** les entraîneurs (9) sont disposés avec un angle aigu par rapport à la surface supérieure du moyen (8) de traction, cependant que les cases (10) sont inclinées dans le sens, à partir duquel les produits (2) sont amenés par la bande (5) de convoyeur d'entrée.

21. Une installation selon la revendication n° 19 ou n°20, **caractérisée en ce que** les entraîneurs (9) sont fixés de façon amovible sur le moyen (8) de traction.

22. Une installation selon une des revendications n° 19 à n°21, **caractérisée en ce que** le moyen de traction est une chaîne (8), qui tourne autour de deux pignons (37a, 37b).

23. Une installation selon la revendication n° 22, **caractérisée en ce que** la chaîne (8) évolue dans le sens du transport des produits (2), avec un angle par rapport au premier pignon (37a), qui est disposé au niveau du point de transmission entre la bande (5) de convoyeur d'entrée et la bande (6) de convoyeur de sortie, en biais vers le bas, en direction du second pignon (37b).

24. Une installation selon la revendication n° 23, **caractérisée en ce que** l'angle de la chaîne (8) est réglable.

25. Une installation selon une des revendications n° 20 à n°24, **caractérisée en ce que** l'angledesentraîneurs(9)estréglable.

26. Une installation selon une des revendications n°19 à n° 25, **caractérisée en ce que** le moyen (8) de traction est entraîné par un entraînement, qui en particulier peut être commandé ou régulé de façon indépendante, de telle façon, que les composantes dans la direction horizontale de la vitesse de l'entraîneur (9) et des cases (10) correspondent à la vitesse de la bande (6) de convoyeur de sortie.

27. Une installation selon une des revendications n°19 à n°26, **caractérisée en ce que** entre 10 et 50, de préférence 20, entraîneurs (9) sont disposés, de façon à être régulièrement répartis, le long du moyen (8) de traction.

28. Une installation selon la revendication n° 18, **caractérisée en ce que** les moyens de ralentissement et les moyens de levage sont constitués d'au moins une roue de positionnement en écailles, qui est guidée en dessous des bandes de convoyeurs et qui, au niveau de sa périphérie, présente plusieurs évidements pour la réception des produits ou des arêtes avant des produits.

29. Une installation selon une des revendications n°23 à n° 28, **caractérisée en ce que** le point le plus haut de la périphérie du premier pignon (37a) ou, le cas échéant, de la périphérie de la roue de positionnement en écailles, se trouve au moins presque à la hauteur de la bande (5) de convoyeur d'entrée.

30. Une installation selon une des revendications n°19 à n°29, **caractérisée en ce que** les axes, autour desquels évolue le moyen (8) de traction ou, le cas échéant, autour desquels tourne la roue de positionnement en écailles, sont disposés dans une direction au moins presque parallèle aux axes des rouleaux de déviation des bandes (5, 6) de convoyeurs.

31. Une installation selon une des revendications n° 19 à n°30, **caractérisée en ce que** sur les deux faces des bandes (5, 6) de convoyeurs est disposé moyen (8) de traction chacune ou, le cas échéant, une roue de positionnement en écailles chacune, qui permettent de saisir les arêtes des produits (2), qui dépassent latéralement par rapport aux bandes (5, 6) de convoyeurs.

32. Une installation selon une des revendications n°18 à n°31, **caractérisée en ce que** la bande (5) de convoyeur d'entrée et / ou la bande (6) de convoyeur de sortie peut basculer autour d'un axe, qui est distant du point (7) de transmission et qui est au moins essentiellement disposé dans la direction horizontale.

33. Une installation selon une des revendications n°18 à n° 32, **caractérisée en ce que** les moyens (8) de ralentissement et les moyens (8) de levage sont disposés de façon à pouvoir coulisser et / ou basculer de telle façon, qu'ils peuvent être amenés à quitter la zone du point (7) de transmission.

34. Une installation selon une des revendications précédentes, **caractérisée en ce que** une bande (3) de convoyeur d'équilibrage est prévue entre le convoyeur d'alimentation et la station (4) de positionnement en écailles.

35. Une installation selon la revendication n° 34, **caractérisée en ce que** la bande (3) de convoyeur d'équilibrage est au moins deux fois plus longue que la longueur d'un produit (2).

36. Une installation selon une des revendications précédentes, **caractérisée en ce que** une bande (12) de convoyeur intermédiaire est prévue entre la station (4) de positionnement en écailles et le convoyeur (14) de remplissage.

37. Une installation selon la revendication n° 36, **caractérisée en ce que** la bande (12) de convoyeur intermédiaire et la bande (6) de convoyeur de sortie réunies sont au moins aussi longues que la longueur d'un groupe (11) de produits.

38. Une installation selon une des revendications précédentes, **caractérisée en ce que** le convoyeur (20) de récipients de produits est disposé de telle façon, que le sens (21) du transport des récipients (1) de produits correspond au sens (21) du flux des produits dans l'installation.

39. Une installation selon une des revendications précédentes, **caractérisée en ce que** le convoyeur (20) de récipients de produits, une bande (3) de convoyeur d'équilibrage, qui est disposée de préférence avant la station (4) de positionnement en écailles, et les bandes (5, 6, 12, 13, 16) de convoyeurs, ainsi que les moyens (8, 27) entraînés de la station (4) de positionnement en écailles, sont entraînés individuellement ou par paires, à un instant donné, par des entraînements distincts, en particulier par des servo-moteurs.

40. Une installation selon une des revendications précédentes, **caractérisée en ce que** au moins deux voies de remplissage, qui peuvent être actionnées l'une indépendamment de l'autre et dont chacune présente un convoyeur d'alimentation, une station (4) de positionnement en écailles, un convoyeur (14) de remplissage et un convoyeur (20) de récipients de produits, sont disposées l'une à côté de l'autre.

41. Un procédé de remplissage de récipients (1) de produits, en particulier de cartons, avec un nombre prédéterminé de produits (2), en particulier d'emballages en forme de sachets flexibles, qui sont alimentés de façon individuelle, à intervalles réguliers ou irréguliers, et qui sont rassemblés avec recouvrement, tels des écailles de poisson, de façon à former un groupe (11) de produits, et qui ensuite sont alimentés dans un récipient (1) de produits préparé, doté d'une installation selon une des revendications précédentes,
**caractérisé en ce que**
les produits (2") d'un groupe (11) de produits sont apposés soit sur, soit sous le produit (2') précédent à un instant donné, au choix,
et que les groupes (11) de produits sont ramenées vers les récipients (1) de produits soit dans la direction verticale, soit dans la direction horizontale, au choix,
cependant que soit les produits (2) d'un groupe (11) de produits sont positionnés en écailles de telle façon, qu'un produit (2") donné est apposé sur le produit (2') précédent et les produits (2) d'un groupe (11) de produits sont alimentés dans les récipients (1) de produits dans la direction horizontale, soit les produits (2) d'un groupe (11) de produits sont positionnés en écailles de telle façon, qu'un produit (2") donné est apposé sous le produit (2') précédent et les produits (2) d'un groupe (11) de produits sont alimentés dans les récipients (1) de produits dans la direction verticale.

42. Un procédé selon la revendication n° 41, cependant qu'un groupe (11 ) de produits est formé par plusieurs produits (2), qui sont ramenés individuellement au moyen d'une bande (5) de convoyeur d'entrée et sont amenés à se recouvrir, tels des écailles de poisson, sur une bande (6) de convoyeur de sortie et sont évacués sous forme de groupes (11) de produits, cependant que, pour la formation d'un groupe (11) de produits, la bande (6) de convoyeur de sortie est entraînée avec une vitesse, qui est inférieure à la vitesse de la bande (5) de convoyeur d'entrée, et cependant que, pour la formation d'un vide (30) entre deux groupes (11) de produits, la bande (6) de convoyeur de sortie est entraînée avec une vitesse supérieure,
**caractérisé en ce que**
la vitesse des produits (2) est réduite au niveau du point (7) de transmission entre la bande (5) de convoyeur d'entrée et la bande (6) de convoyeur de sortie,
que l'arête avant des produits (2), considérés dans le sens de l'alimentation, est levée et / ou l'arête arrière des produits (2), considérés dans le sens de l'alimentation, est abaissée au niveau du point (7) de transmission entre la bande (5) de convoyeur d'entrée et la bande (6) de convoyeur de sortie,
que les produits (2") sont amenés dans cette position au-dessus d'une partie du produit (2') précédent correspondant,
et que les produits (2") ensuite sont apposés sur le produit (2') précédent correspondant.

43. Un procédé selon la revendication n° 41, cependant qu'un groupe (11) de produits est formé par plusieurs produits (2), qui sont ramenés individuellement au moyen d'une bande (5) de convoyeur d'entrée et sont amenés à se recouvrir, tels des écailles de poisson, sur une bande (6) de convoyeur de sortie et sont évacués sous forme de groupes (11) de produits, cependant que, pour la formation d'un groupe (11) de produits, la bande (6) de convoyeur de sortie est entraînée avec une vitesse, qui est inférieure à la vitesse de la bande (5) de convoyeur d'entrée, et cependant que, pour la formation d'un vide (30) entre deux groupes (11) de produits, la bande (6) de convoyeur de sortie est entraînée avec une vitesse supérieure,
**caractérisé en ce que**
la vitesse des produits (2) est réduite au niveau du point (7) de transmission entre la bande (5) de convoyeur d'entrée et la bande (6) de convoyeur de sortie,
que l'arête arrière des produits (2), considérés dans le sens de l'alimentation, est levée et / ou l'arête avant des produits (2), considérés dans le sens de l'alimentation, est abaissée au niveau du point (7) de transmission entre la bande (5) de convoyeur d'entrée et la bande (6) de convoyeur de sortie,
que les produits (2") sont amenés dans cette position en dessous d'une partie du produit (2') précédent à un instant donné,
et que les produits ensuite sont disposés sur la bande (6) de convoyeur de sortie.
